(19)

Europäisches Patentamt

European Patent Office

Office européen des brevets

(11) **EP 4 472 122 A1**

(12) **EUROPEAN PATENT APPLICATION**
published in accordance with Art. 153(4) EPC

(43) Date of publication:
04.12.2024 Bulletin 2024/49

(21) Application number: 23763752.5

(22) Date of filing: 03.03.2023

(51) International Patent Classification (IPC):
*H04L 5/00* (2006.01)       *H04L 27/26* (2006.01)
*H04W 72/23* (2023.01)       *H04W 72/04* (2023.01)
*H04W 72/51* (2023.01)       *H04B 7/06* (2006.01)

(52) Cooperative Patent Classification (CPC):
H04B 7/06; H04L 5/00; H04L 27/26; H04W 72/04;
H04W 72/23; H04W 72/51

(86) International application number:
PCT/KR2023/002963

(87) International publication number:
WO 2023/167554 (07.09.2023 Gazette 2023/36)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 03.03.2022 KR 20220027563

(71) Applicant: Samsung Electronics Co., Ltd
Suwon-si, Gyeonggi-do 16677 (KR)

(72) Inventors:
• JUNG, Euichang
  Suwon-si, Gyeonggi-do 16677 (KR)
• JANG, Youngrok
  Suwon-si, Gyeonggi-do 16677 (KR)
• YOON, Suha
  Suwon-si, Gyeonggi-do 16677 (KR)

(74) Representative: HGF
HGF Limited
1 City Walk
Leeds LS11 9DX (GB)

(54) **METHOD AND DEVICE FOR REPETITIVE TRANSMISSION AND RECEPTION OF UPLINK DATA FOR NETWORK COOPERATIVE COMMUNICATION**

(57) The present disclosure relates to a 5G or 6G communication system for supporting higher data transmission rates, and discloses a method for transmitting a sounding reference signal (SRS) in a wireless communication system. The method comprises the steps of: receiving configuration information including a first configuration for SRS resource sets; confirming that the usage of the SRS resource sets is configured to antenna switching on the basis of the first configuration; and transmitting the SRS on the basis of x antennas among y reception antennas of an electronic device, wherein y is a natural number of 6 or larger, x is a natural number of y or smaller, and the number of the SRS resource sets associated with the SRS transmission may be determined on the basis of whether capability information about the electronic device associated with the resource type of the SRS is reported in the time domain.

FIG. 13A

xTyR (x=6, y=8)

1300

xTyR (x=8, y=8)

1320

EP 4 472 122 A1

**Description**

[Technical Field]

The disclosure relates to a method and a device for repetitive transmission and reception of uplink data in a network cooperative communication system.

[Background Art]

5th generation (5G) mobile communication technologies define broad frequency bands such that high transmission rates and new services are possible, and can be implemented not only in "Sub 6GHz" bands such as 3.5 GHz, but also in "Above 6 GHz" bands referred to as mmWave including 28 GHz and 39 GHz. In addition, it has been considered to implement 6th generation (6G) mobile communication technologies (referred to as Beyond 5G systems) in terahertz bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

The disclosure is to provide a device and a method enabling effective provision of a service in a wireless communication system. Specifically, a method for SRS resource configuration and/or SRS resource set configuration for supporting more than four uplink transmission (Tx) antenna ports is proposed.

In addition, various embodiments of the disclosure propose a parameter required to be added or expanded in an SRS resource configuration process of a base station.

In addition, a 8Tx/6Tx-based SRS transmission method, suitable for supported various subcarrier spacings (SCSs), considering multiple SRS ports in a frequency band of 6 GHz or higher is proposed.

[Technical Solution]

A method of transmitting a sounding reference signal (SRS) by an electronic device in a wireless communication system according to an embodiment of the disclosure may include receiving configuration information including a first configuration for SRS resource sets, identifying, based on the first configuration, that a usage of the SRS resource sets is configured to be antenna switching, and transmitting the SRS, based on x antennas among y reception antennas of the electronic device, wherein y is a natural number equal to or greater than 6, and x is a natural number equal to or smaller than y, and wherein the number of the SRS resource sets associated with the SRS transmission is determined based on whether capability information of the electronic device associated with a resource type of the SRS in a time domain is reported.

In addition, in the method according to an embodiment of the disclosure, x may be equal to 8, and in case that a semi-persistent SRS resource type being supported by the electronic device is reported based on the capability information, the number of the SRS resource sets may be determined to be 2.

In addition, in the method according to an embodiment of the disclosure, multiple SRS resource sets of a semi-persistent type may be configured through radio resource control (RRC) signaling, based on the first configuration, and one of the multiple SRS resource sets may be activated through medium access control-control element (MAC-CE) signaling.

In addition, the method according to an embodiment of the disclosure may further include transmitting information on an SRS antenna switching capability supported by the electronic device, and the information may include a parameter indicating that antenna switching in case that x is equal to 8 and y is equal to 8 is supported.

In addition, in the method according to an embodiment of the disclosure, x may be equal to 8, a subcarrier spacing at which the SRS may be transmitted is 480 kHz or 960 kHz, and multiple SRS resources included in one SRS resource set may be transmitted over multiple slots.

In addition, in the method according to an embodiment of the disclosure, the configuration information may include a second configuration for an SRS resource, the second configuration may include a first parameter indicating the number of SRS ports, a second parameter for configuration of a transmission comb, and a third parameter indicating a position of the SRS resource, the first parameter may be configured to be 8 ports, the second parameter may include a first sub parameter indicating a comb offset corresponding to the 8 ports and a second sub parameter indicating a cyclic shift, and the third parameter may include the number of SRS symbols in a slot, which is configured to be 8.

An electronic device for transmitting a sounding reference signal (SRS) in a wireless communication system according to an embodiment of the disclosure may include a transceiver configured to receive configuration information including a first configuration for SRS resource sets, and a controller configured to identify, based on the first configuration, that a usage of the SRS resource sets is configured to be antenna switching, and to transmit the SRS, based on x antennas among y reception antennas of the electronic device, wherein y is a natural number equal to or greater than 6, and x is a natural number equal to or smaller than y, and wherein the number of the SRS resource sets associated with the SRS transmission is determined based on whether capability information of the electronic device associated with a resource type of the SRS in a time domain is reported.

A method of receiving a sounding reference signal (SRS) by a base station in a wireless communication system according to an embodiment of the disclosure may include transmitting, to an electronic device, configuration information including a first configuration for SRS resource sets, and receiving the SRS transmitted based on x antennas among y reception antennas of the electronic device, wherein a usage of the SRS resource sets is configured to be antenna switching, based on the first configuration, wherein y is a natural number equal to or greater than 6, and x is a natural number equal to or smaller than y, and wherein the number of the SRS resource sets associated with the SRS transmission is determined based on whether capability information of the electronic device associated with a resource type of the SRS in a time domain is reported.

A base station for receiving a sounding reference signal (SRS) in a wireless communication system according to an embodiment of the disclosure may include a transceiver configured to transmit, to an electronic device, configuration information including a first configuration on SRS resource sets, and receive the SRS transmitted based on x antennas among y reception antennas of the electronic device, and a controller configured to control the transceiver, wherein a usage of the SRS resource sets is configured to be antenna switching, based on the first configuration, wherein y is a natural number equal to or greater than 6, and x is a natural number equal to or smaller than y, and wherein the number of the SRS resource sets associated with the SRS transmission is determined based on whether capability information of the electronic device associated with a resource type of the SRS in a time domain is reported.

The technical subj ects pursued in various embodiments of the disclosure may not be limited to the above-mentioned technical subjects, and other technical subjects which are not mentioned may be clearly understood from the following descriptions by those skilled in the art to which the disclosure pertains.

[Advantageous Effects]

According to an embodiment of the disclosure, SRS resources and/or SRS resource sets for supporting more than four uplink transmission (Tx) antenna ports may be configured.

In addition, according to an embodiment of the disclosure, an electronic device having multiple reception antennas (e.g., 8, 12, 24, etc.) may transmit an SRS through six or more Tx antenna ports, based on antenna switching.

In addition, according to an embodiment of the disclosure, a guard period between SRS resources may be configured to correspond to various subcarrier spacings supported in a frequency band of 6 GHz or higher.

Advantageous effects obtainable from the disclosure may not be limited to the above-mentioned effects, and other effects which are not mentioned may be clearly understood from the following descriptions by those skilled in the art to which the disclosure pertains.

[Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of bandwidth part configuration in a wireless communication system according to an embodiment of the disclosure.

FIG. 4 illustrates an example of control resource set configuration of a downlink control channel in a wireless communication system according to an embodiment of the disclosure.

FIG. 5A illustrates a structure of a downlink control channel in a wireless communication system according to an embodiment of the disclosure.

FIG. 5B illustrates, in terms of spans, a case in which a UE may have multiple PDCCH monitoring occasions inside a slot in a wireless communication system according to an embodiment of the disclosure.

FIG. 6 illustrates an example of a DRX operation in a wireless communication system according to an embodiment of the disclosure.

FIG. 7 illustrates an example of base station beam allocation according to TCI state configuration in a wireless communication system according to an embodiment of the disclosure.

FIG. 8 illustrates an example of a method for allocating a TCI state to a PDCCH in a wireless communication system according to an embodiment of the disclosure.

FIG. 9 illustrates a TCI indication MAC CE signaling structure for a PDCCH DMRS in a wireless communication system according to an embodiment of the disclosure.

FIG. 10 illustrates an example of beam configuration with regard to a CORESET and a search space in a wireless communication system according to an embodiment of the disclosure.

FIG. 11 is a diagram illustrating an example of antenna port configuration and resource allocation for cooperative communication in a wireless communication system according to an embodiment of the disclosure;

FIG. 12 is a diagram illustrating a configuration example of downlink control information (DCI) for cooperative communication in a wireless communication system according to an embodiment of the disclosure;

FIG. 13A illustrates an example of Tx/Rx antenna port mapping for SRS antenna switching according to an embodiment of the disclosure;

FIG. 13B is an example for illustrating antenna ports configured for an SRS resource according to an embodiment of the disclosure;

FIG. 14A is a diagram illustrating a method of configuring a minimum guard period, an SRS resource, and an SRS resource set for an extended SCS according to an embodiment of the disclosure;

FIG. 14B is another diagram illustrating a method of configuring a minimum guard period, an SRS resource, and an SRS resource set for an extended SCS according to an embodiment of the disclosure;

FIG. 15 illustrates an example of a signaling procedure between an electronic device and a base station according to an embodiment of the disclosure;

FIG. 16 illustrates a structure of a UE in a wireless communication system according to an embodiment of the disclosure.

FIG. 17 illustrates a structure of a base station in a wireless communication system according to an embodiment of the disclosure.

[Mode for Invention]

Hereinafter, embodiments of the disclosure are described in detail below with reference to the accompanying drawings.

Detailed descriptions of technical specifications well-known in the art and unrelated directly to the disclosure may be omitted to avoid obscuring the subject matter of the disclosure. Basically, unnecessary description is omitted in order to make the subject matter of the disclosure clearer.

Similarly, some elements are exaggerated, omitted, or simplified in the drawings and, in practice, the elements may have sizes and/or shapes different from those shown in the drawings. Throughout the drawings, the same or equivalent parts are indicated by the same reference numbers.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Further, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. In the disclosure, a "downlink" refers to a radio link via which a base station transmits a signal to a terminal, and an "uplink" refers to a radio link via which a terminal transmits a signal to a base station. Further, although the following description may be directed to a 5G system by way of example, embodiments of the disclosure may also be applied to other communication systems having similar technical backgrounds or channel types to the embodiments of the disclosure. Examples of other communication systems may include LTE or LTE-A mobile communication and a mobile communication technology(6G) developed beyond LTE-A. In addition, based on determinations by those skilled in the art, the disclosure may be applied to other communication systems through some modifications without significantly departing from the scope of the disclosure. The contents of the disclosure are applicable to FDD and TDD systems.

Each block of the flowcharts and/or block diagrams, and combinations of blocks in the flowcharts and/or block diagrams, can be implemented by computer program instructions. These computer program instructions may be provided to a processor of a general-purpose computer, special purpose computer, or other programmable data processing apparatus, such that the instructions that are executed via the processor of the computer or other programmable data processing apparatus implement the functions/acts specified in the flowcharts and/or block diagrams. These computer program instructions may also be stored in a non-transitory computer-readable memory that can direct a computer or other programmable data processing apparatus to function in a particular manner, such that the instructions stored in the non-transitory computer-readable memory produce articles of manufacture embedding instructions that implement the function/act specified in the flowcharts and/or block diagrams. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions/acts specified in the flowcharts and/or block diagrams.

Further, the respective block diagrams may illustrate parts of modules, segments, or codes including at least one or more executable instructions for performing specific logic function(s). The functions of the blocks may be performed in a different order in several modifications. For example, two successive blocks may be performed substantially at the same time, or they may be performed in reverse order according to their functions.

According to an embodiment of the disclosure, the term "module" means, but is not limited to, a software or hardware component, such as a field programmable gate array (FPGA) or application specific integrated circuit (ASIC), which performs certain tasks. A module may advantageously be configured to reside on the addressable storage medium and configured to be executed on one or more processors. Thus, a module may include components, such as software components, object-oriented software components, class components and task components, processes, functions, attributes, procedures, subroutines, segments of program code, drivers, firmware, microcode, circuitry, data, databases, data structures, tables, arrays, and variables. The functionalities of the components and modules may be combined into fewer components and modules or further separated into more components and modules. In addition, the components and modules may be implemented such that they execute one or more central processing units (CPUs) in a device or a secure multimedia card. Further, in an embodiment, a module may include one or more processors.

Mobile communication systems have evolved into high-speed, high-quality packet data communication systems (such as high speed packet access (HSPA), LTE (or evolved universal terrestrial radio access (E-UTRA)), and LTE-Advanced (LTE-A) defined in the 3GPP, high rate packet data (HRPD) defined in the 3rd generation partnership project-2 (3GPP2), ultra mobile broadband (UMB), and 802.16e defined by the Institute of Electrical and Electronics Engineers (IEEE)) capable of providing data and multimedia services beyond the early voice-oriented services.

As a representative broadband wireless communication system, an LTE system uses orthogonal frequency division multiplexing (OFDM) in the downlink and single carrier frequency division multiple access (SC-FDMA) in the uplink. The term "uplink (UL)" denotes a radio transmission path from a terminal (or UE or MS) to a base station (gNB), and the term "downlink (DL)" denotes a radio transmission path from the base station to the terminal. Such multiple access schemes are characterized by allocating the time-frequency resources for transmitting user-specific data and control information without overlapping each other, i.e., maintaining orthogonality, in order to distinguish among user-specific data and control information.

As a next generation communication system after LTE, the 5G communication system should meet various requirements of services demanded by users and service providers. The services to be supported by 5G systems may be categorized into three categories: enhanced mobile broadband (eMBB), massive machine type communications (mMTC), and ultra-reliable and low-latency communications (URLLC).

eMBB is intended to provide exceptionally high data rate in comparison with those supported by the legacy LTE, LTE-A, and LTE-A Pro. For example, the eMBB should increase the peak data rate up to 20 Gbps in DL and 10 Gbps in UL per base station. Simultaneously, eMBB should improve the user-perceived data rate. In order to meet such requirements, signal transmission/reception technologies including a MIMO technique should be improved. The data rate requirements for 5G communication systems may be met by use of a frequency bandwidth broader than 20 MHz in the frequency band of 3 to 6 GHz or above 6 GHz instead of the current LTE band of 2 GHz.

mMTC is intended to support application services for IoT. In order to provide mMTC-based IoT application services effectively, massive access resources should be secured for terminals within a cell, terminal coverage and battery life span should be improved, and device manufacturing cost should be reduced. The IoT services should be designed to support a large number of terminals (e.g., 1,000,000 terminals/km2) within a cell in consideration of the nature of the IoT terminals that are attached to various sensors and devices for providing a communication function. By the nature of the IoT services, the mMTC terminals will likely be located in coverage holes such as a basement of a building, which requires broader coverage in comparison with other services being supported in the 5G communication system. The mMTC terminals that are characterized by their low prices and battery replacement difficulty should be designed to have very long battery lifetime.

URLLC is targeted for mission-critical cellular-based communication services such as remote robots and machinery control, industrial automation, unmanned aerial vehicles, remote health care, and emergency alert services that require ultra-low latency and ultra-high reliability. Accordingly, a URLLC service requires an ultra-low latency and ultra-high reliability. For example, a URLLC service should meet the requirements of air-interface latency lower than 0.5 ms and a packet error rate less than or equal to 10-5. In order to support the URLLC services, the 5G system should support transmit time intervals (TTI) shorter than those of other services and assign broad resources in the frequency band. Accordingly, the 5G system should support a short TTI for the URLLC, which is shorter than that for other services, and allocate broad resources in a frequency band to secure reliability of the communication link.

Three services of 5G, namely eMBB, URLLC, and mMTC, may be multiplexed and transmitted in one system. At this time, in order to meet the different requirements of the respective services, different transmission/reception schemes and transmission/reception parameters may be used for the services. Of course, 5G is not limited to the above-described three services.

[NR time-frequency resources]

Hereinafter, the frame structure of the 5G system will be described in more detail with reference to the drawings.

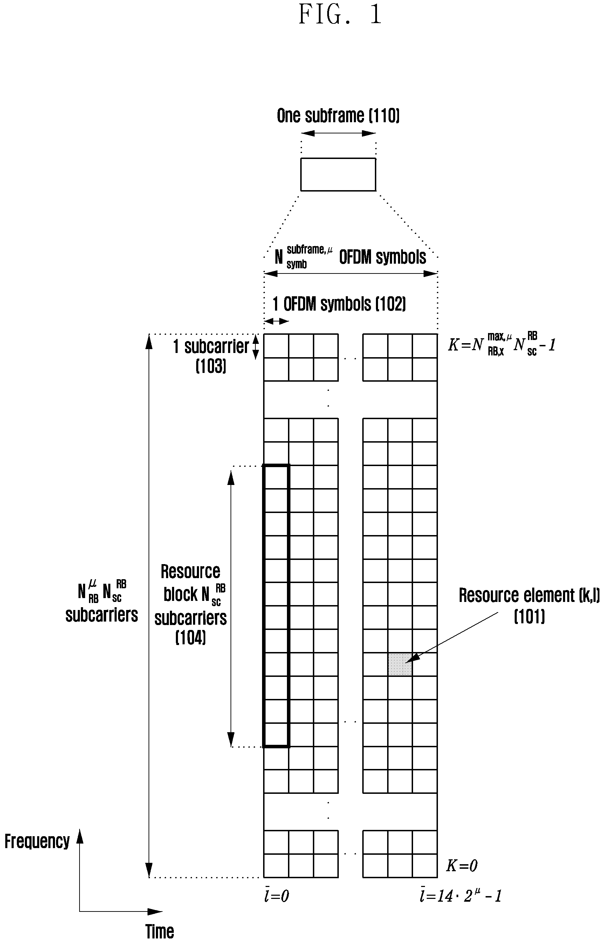

FIG. 1 is a diagram illustrating a basic structure of a time-frequency domain, which is a radio resource region where data or control channel are transmitted, in a 5G system.

In FIG. 1, a horizontal axis represents a time domain, and a vertical axis represents a frequency domain. A basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (e.g., twelve) consecutive REs may constitute one resource block (RB) 104.

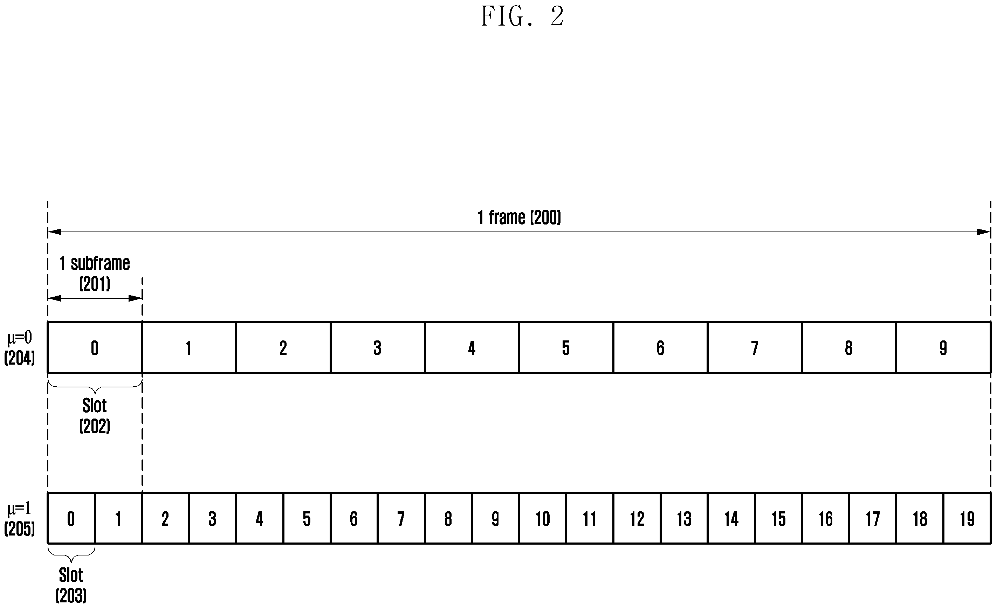

FIG. 2 illustrates frame, subframe, and slot structures in a 5 system.

In FIG. 2, an example of the structure of a frame 200, a subframe 201, and a slot 202 is illustrated. 1 frame 200 may be defined as 10 ms. 1 subframe 201 may be defined as 1 ms, and accordingly one frame 200 may include a total of 10 subframes 201. 1 slot 202 or 203 may be defined as 14 OFDM symbols (that is, the number symbols $N_{symb}^{slot}$) per slot =14). 1 subframe 201 may include one or a plurality of slots 202 and 203, and the number of slots 202 or 203 per subframe 201 may vary depending on a configuration value μ 204 or 205 for subcarrier spacing. In the example of FIG. 2 illustrates the case in which the subcarrier spacing configuration value μ=0 204 and the case in which the subcarrier spacing configuration value μ=1 205. 1 subframe 201 may include one slot 202 in the case of μ=0 204, and 1 subframe 201 may include 2 slots 203 in the case of μ=1 205. That is, the number ($N_{slot}^{subframe,\mu}$) of slots per subframe may vary depending on the configuration value (μ) for subcarrier spacing, and accordingly the number ($N_{slot}^{frame,\mu}$) of slots per frame may vary. The number ($N_{slot}^{subframe,\mu}$) and the number ($N_{slot}^{frame,\mu}$) according to the subcarrier spacing configuration value (μ) may be defined as shown in [Table 1] below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Subsequently, a configuration of a bandwidth part (BWP) in a 5G system is described in detail with reference to the drawings.

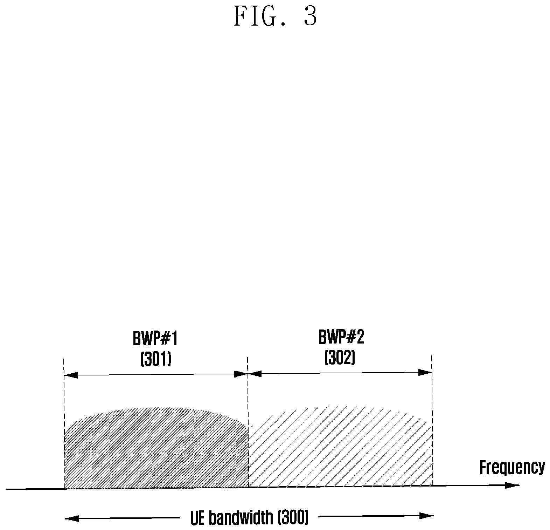

FIG. 3 illustrates an example of a configuration for a BWP in a 5G system.

In FIG. 3, a UE bandwidth 300 is configured as two bandwidth parts, that is, BWP #1 31 and BWP #2 302. The BS may configure one or a plurality of BWPs in the UE, and the following information may be configured to each BWP.

【Table 2】

| BWP ::= | SEQUENCE { |
|---|---|
| bwp-Id | BWP-Id, |
| (bandwidth part identifier) | |
| locationAndBandwidth | INTEGER (1..65536), |
| (bandwidth part location) | |
| subcarrierSpacing | ENUMERATED |
| {n0, n1, n2, n3, n4, n5}, | |
| (subcarrier spacing) | |
| cyclicPrefix | ENUMERATED |
| { extended } | |
| (cyclic prefix) | |
| } | |

Of course, the disclosure is not limited to the example, and various parameters related to a BWP as well as the configuration information may be configured in the UE. The information may be transmitted from to the UE by the BS through higher-layer signaling, for example, radio resource control (RRC) signaling. Among one or a plurality of configured BWPs, at least one BSP may be activated. Information indicating whether to activate the configured BWPs may be semi-statically transferred from the BS to the UE through RRC signaling or may be dynamically transferred through Downlink Control Information (DCI).

According to an embodiment of the disclosure, the UE before the Radio Resource Control (RRC) connection may receive a configuration of an initial BWP for initial access from the BS through a master information block (MIB). More specifically, the UE may receive configuration information for a control resource set (CORESET) and a search space in which a PDCCH for receiving system information (remaining system information (RMSI) or system information block 1 (SIB1)) required for initial access through the MIB can be transmitted in an initial access step. The control resource set and the search space configured as the MIB may be considered as an identity (ID) 0. The BS may inform the UE of configuration information such as frequency allocation information for control resource set #0, time allocation information, numerology, and the like through the MIB. Further, the BS may inform the UE of configuration information for a monitoring period and an occasion of control resource set #0, that is, configuration information for search space #0 through the MIB. The UE may consider a frequency region configured as control resource set #0 acquired from the MIB as an initial bandwidth part for initial access. At this time, the ID of the initial BWP may be considered as 0.

The configuration for the BWP supported by the 5G system may be used for various purposes.

According to an embodiment of the disclosure, when a bandwidth supported by the UE is narrower than a system bandwidth, it may be supported through the BWP configuration. For example, the BS may configure a frequency location (configuration information 2) of the BWP in the UE, and thus the UE may transmit and receive data at a specific frequency location within the system bandwidth.

Further, according to an embodiment of the disclosure, in order to support different numerologies, the BS may configure a plurality of BWPs in the UE. For example, in order to support the UE to perform data transmission and reception using both subcarrier spacing of 15 kHz and subcarrier spacing of 30 kHz, two BWPs may be configured as subcarrier spacings of 15 kHz and 30 kHz, respectively. Different BWPs may be frequency division-multiplexed, and when data is to be transmitted and received at specific subcarrier spacing, BWPs configured at the corresponding subcarrier spacing may be activated.

According to an embodiment of the disclosure, in order to reduce power consumption of the UE, the BS may configure BWPs having different sizes of bandwidths in the UE. For example, when the UE supports a very large bandwidth, for example, 100 MHz but always transmits and receives data through the bandwidth, very high power consumption may be generated. Particularly, monitoring an unnecessary downlink control channel through a large bandwidth of 100 MHz in the state in which there is no traffic is very inefficient from the aspect of power consumption. In order to reduce power consumption of the UE, the BS may configure a BWP having a relatively narrow bandwidth, for example, a bandwidth of 200 MHz. The UE may perform a monitoring operation in the bandwidth part of 200 MHz in the state in which there is no traffic, and if data is generated, may transmit and receive data through the bandwidth part of 100 MHz according to an instruction from the BS.

In a method of configuring the BWP, UEs before the RRC connection may receive configuration information for an initial bandwidth part through a master information block (MIB) in an initial access step. More specifically, the UE may receive a configuration of a control resource set (CORESET) for a downlink control channel in which downlink control information (DCI) for scheduling a system information block (SIB) can be transmitted from an MIB of a physical broadcast channel (PBCH). A bandwidth of the control resource set configured as the MIB may be considered as an initial bandwidth part, and the UE may receive a physical downlink shared channel (PDSCH), in which the SIB is transmitted, through the configured initial bandwidth part. The initial BWP may be used not only for reception of the SIB but also other system information (OSI), paging, or random access.

[SS/PBCH block]

Subsequently, a synchronization signal (SS)/PBCH block in a 5G system is described.

The SS/PBCH block may be a physical layer channel block including a primary SS (PSS), a secondary SS (SSS), and a PBCH. A detailed description thereof is made below.

- PSS: is a signal which is a reference of downlink time/frequency synchronization and provides some pieces of information of a cell ID.
- SSS: is a reference of downlink time/frequency synchronization and provides the remaining cell ID information which the PSS does not provide. In addition, the SSS serves as a reference signal for demodulation of a PBCH.
- PBCH: provides necessary system information required for transmitting and receiving a data channel and a control channel by the UE. The necessary system information may include search space-related control information indicating radio resource mapping information of the control channel and scheduling control information for a separate data channel for transmitting system information.
- SS/PBCH block: includes a combination of PSS, SSS, and PBCH. One or a plurality of SS/PBCH blocks may be transmitted within a time of 5 ms, and each of the transmitted SS/PBCH blocks may be separated by an index.

The UE may detect the PSS and the SSS in an initial access stage and decode the PBCH. The UE may acquire an MIB from the PBCH and receive a configuration of control resource set (CORESET) #0 (corresponding to a control resource set having control resource set index 0) therefrom. The UE may monitor control resource set #0 on the basis of the assumption that the selected SS/PBCH block and a demodulation reference signal (DMRS) transmitted in control resource set #0 are quasi co-located (QCLed). The UE may receive system information through downlink control information transmitted in control resource set #0. The UE may acquire configuration information related to a random access channel (RACH) required for initial access from the received system information. The UE may transmit a physical RACH (PRACH) to the BS in consideration of the selected SS/PBCH block index, and the BS receiving the PRACH may acquire the SS/PBCH block index selected by the UE. The BS may know which block is selected by the UE from among the SS/PBCH blocks and that CORESET #0 related thereto is monitored.

[Regarding PDCCH: DCI]

Subsequently, downlink control information (DCI) in a 5G system is described in detail.

In the 5G system, scheduling information for uplink data (or a physical uplink data channel (physical uplink shared channel (PUSCH)) or downlink data (or physical downlink data channel (physical downlink shared channel (PDSCH)) is transmitted from the BS to the UE through DCI. The UE may monitor a fallback DCI format and a non-fallback DCI format for the PUSCH or the PDSCH. The fallback DCI format may include a fixed field predefined between the BS and the UE, and the non-fallback DCI format may include a configurable field.

The DCI may be transmitted through a Physical Downlink Control Channel (PDCCH) via a channel coding and modulation process. A cyclic redundancy check (CRC) may be added to a DCI message payload and may be scrambled by a radio network temporary identifier (RNTI) corresponding to the identity of the UE. Depending on the purpose of the DCI message, for example, UE-specific data transmission, a power control command, a random access response, or the like, different RNTIs may be used. That is, the RNTI is not explicitly transmitted but is included in a CRC calculation process to be transmitted. If the DCI message transmitted through the PDCCH is received, the UE may identify the CRC through the allocated RNTI, and may recognize that the corresponding message is transmitted to the UE when the CRC is determined to be correct on the basis of the CRC identification result.

For example, DCI for scheduling a PDSCH for system information (SI) may be scrambled by an SI-RNTI. DCI for scheduling a PDSCH for a random access response (RAR) message may be scrambled by an RA-RNTI. DCI for scheduling a PDSCH for a paging message may be scrambled by a P-RNTI. DCI for notifying of a slot format indicator (SFI) may be scrambled by an SFI-RNTI. DCI for notifying of transmit power control (TPC) may be scrambled with a TPC-RNTI. DCI for scheduling a UE-specific PDSCH or PUSCH may be scrambled by a cell RNTI (C-RNTI).

DCI format 0_0 may be used for fallback DCI for scheduling a PUSCH in which case the CRC may be scrambled by a C-RNTI. DCI format 0_0 in which the CRC is scrambled by the C-RNTI may include, for example, the following information.

[Table 3]

| |
|---|
| - Identifier for DCI formats - [1] bit |
| - Frequency domain resource assignment - $\left\lceil \log_2 (N_{RB}^{UL, BWP} (N_{RB}^{UL, BWP} +1)/2) \right\rceil$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink (UL)/supplementary UL (SUL) indicator - 0 or 1 bit |

DCI format 0_1 may be used for non-fallback DCI for scheduling a PUSCH in which case the CRC may be scrambled by a C-RNTI. DCI format 0_1 in which the CRC is scrambled by the C-RNTI may include, for example, the information of Table 4.

[Table 4]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| For resource allocation type 0, $\left\lceil N_{RB}^{UL, BWP} /P \right\rceil$ bits. For resource allocation type 1, $\left\lceil \log_2 (N_{RB}^{UL, BWP} (N_{RB}^{UL, BWP} +1)/2) \right\rceil$ bits |
| - Time domain resource assignment -1, 2, 3, or 4 bits |
| - Virtual resource block (VRB)-to-physical resource block (PRB) mapping - 0 or 1 bit, only for resource allocation type 1. 0 bit if only resource allocation type 0 is configured; 1 bit otherwise. |
| - Frequency hopping flag - 0 or 1 bit, only for resource allocation type 1. 0 bit if only resource allocation type 0 is configured; 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index - 1 or 2 bits. 1 bit for semi-static HARQ-ACK codebook; |

(continued)

| | | |
|---|---|---|
| - | 2nd downlink assignment index - 0 or 2 bits | 2 bits for dynamic HARQ-ACK codebook with single HARQ-ACK codebook.<br><br>2 bits for dynamic HARQ-ACK codebook with two HARQ-ACK sub-codebooks;<br>0 bit otherwise. |
| - | TPC command for scheduled PUSCH - 2 bits | |
| - | SRS resource indicator $\left\lceil \log_2\left(\sum_{k=1}^{L_{max}}\binom{N_{SRS}}{k}\right)\right\rceil$ or $\left\lceil \log_2(N_{SRS})\right\rceil$ bits | |
| • | $\left\lceil \log_2\left(\sum_{k=1}^{L_{max}}\binom{N_{SRS}}{k}\right)\right\rceil$ bits for non-codebook based PUSCH transmission; | |
| • | $\left\lceil \log_2(N_{SRS})\right\rceil$ bits for codebook based PUSCH transmission. | |
| - | Precoding information and number of layers -up to 6 bits | |
| - | Antenna ports - up to 5 bits | |
| - | SRS request - 2 bits | |
| - | Channel state information (CSI) request - 0, 1, 2, 3, 4, 5, or 6 bits | |
| - | Code block group (CBG) transmission information - 0, 2, 4, 6, or 8 bits | |
| - | Phase tracking reference signal (PTRS)-demodulation reference signal (DMRS) association - 0 or 2 bits. | |
| - | beta_offset indicator - 0 or 2 bits | |
| - | DMRS sequence initialization - 0 or 1 bit | |

DCI format 1_0 may be used for fallback DCI for scheduling a PDSCH in which case the CRC may be scrambled by a C-RNTI. DCI format 1_0 in which the CRC is scrambled by the C-RNTI may include, for example, the information of Table 5.

[Table 5]

| | |
|---|---|
| - | Identifier for DCI formats - [1] bit |
| - | Frequency domain resource assignment - $\left[\left\lceil \log_2(N_{RB}^{DL,BWP}(N_{RB}^{DL,BWP}+1)/2)\right\rceil\right]$ bits |
| - | Time domain resource assignment - X bits |
| - | VRB-to-PRB mapping - 1 bit. |
| - | Modulation and coding scheme - 5 bits |
| - | New data indicator - 1 bit |
| - | Redundancy version - 2 bits |
| - | HARQ process number - 4 bits |
| - | Downlink assignment index - 2 bits |
| - | TPC command for scheduled PUCCH - [2] bits |
| - | Physical uplink control channel (PUCCH) resource indicator - 3 bits |
| - | PDSCH-to-HARQ feedback timing indicator - [3] bits |

DCI format 1_1 may be used for non-fallback DCI for scheduling a PDSCH in which case the CRC may be scrambled by a C-RNTI. DCI format 1_1 in which the CRC is scrambled by the C-RNTI may include, for example, the information of Table 6.

[Table 6]

| | |
|---|---|
| - | Carrier indicator - 0 or 3 bits |
| - | Identifier for DCI formats - [1] bits |

(continued)

| | |
|---|---|
| - | Bandwidth part indicator - 0, 1 or 2 bits |
| - | Frequency domain resource assignment |

For resource allocation type 0, $\left\lceil N_{\mathrm{RB}}^{\mathrm{DL, BWP}} / P \right\rceil$ bits

For resource allocation type 1, $\left\lceil \log_2 (N_{\mathrm{RB}}^{\mathrm{DL, BWP}} (N_{\mathrm{RB}}^{\mathrm{DL, BWP}} + 1)/2) \right\rceil$ bits

-     Time domain resource assignment -1, 2, 3, or 4 bits
-     VRB-to-PRB mapping - 0 or 1 bit, only for resource allocation type 1.

0 bit if only resource allocation type 0 is configured;

1 bit otherwise.

-     Physical resource block (PRB) bundling size indicator - 0 or 1 bit
-     Rate matching indicator - 0, 1, or 2 bits
-     Zero power (ZP) channel state information (CSI)-reference signal (RS) trigger - 0, 1, or 2 bits

For transport block 1:

-     Modulation and coding scheme - 5 bits
-     New data indicator - 1 bit
-     Redundancy version - 2 bits

For transport block 2:

-     Modulation and coding scheme - 5 bits
-     New data indicator - 1 bit
-     Redundancy version - 2 bits
-     HARQ process number - 4 bits
-     Downlink assignment index - 0 or 2 or 4 bits
-     TPC command for scheduled PUCCH - 2 bits
-     PUCCH resource indicator - 3 bits
-     PDSCH-to-HARQ_feedback timing indicator - 3 bits
-     Antenna ports - 4, 5 or 6 bits
-     Transmission configuration indication - 0 or 3 bits
-     SRS request - 2 bits
-     CBG transmission information - 0, 2, 4, 6, or 8 bits
-     Code block group (CBG) flushing out information - 0 or 1 bit
-     DMRS sequence initialization - 1 bit

[PDCCH: CORESET, REG, CCE, Search Space]

Subsequently, a downlink control channel in a 5G communication system is described in more detail with reference to the drawings.

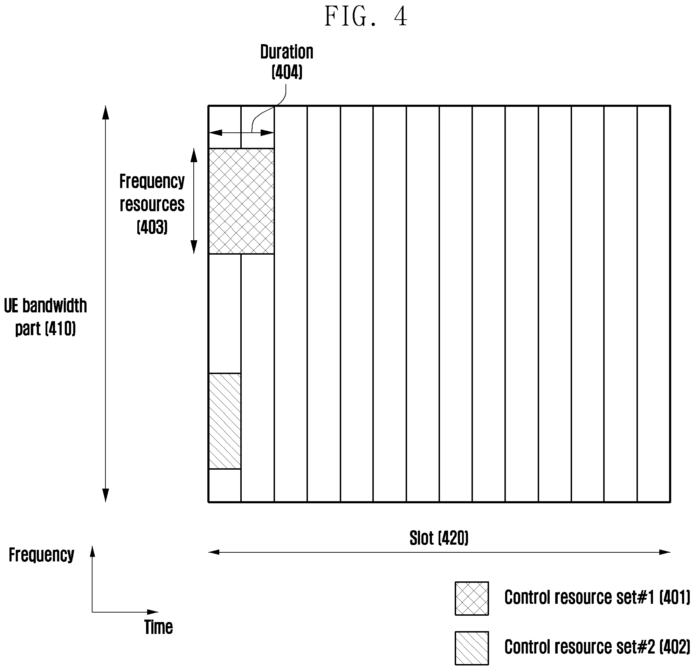

FIG. 4 illustrates an example of a control resource set (CORESET) in which a downlink control channel is transmitted in 5G wireless communication systems. FIG. 4 illustrates an example in which a UE bandwidth part 410 is configured in the frequency axis and two control resource sets (control resource set #1 401 and control resource set #2 402) are configured within 1 slot 420 in the time axis. The control resource sets 401 and 402 may be configured in specific frequency resources 403 within a total UE BWP 410 in the frequency axis. The control resource set may be configured as one or a plurality of OFDM symbols in the time axis, which may be defined as a control resource set duration 404. Referring to the example illustrated in FIG. 4, control resource set #1 401 may be configured as a control resource set duration of 2 symbols, and control resource set #2 402 may be configured as a control resource set duration of 1 symbol.

The control resource sets in the 5G system may be configured through higher-layer signaling (for example, system information, a master information block (MIB), or radio resource control (RRC) signaling) in the UE by the BS. Configuring the control resource set in the UE may mean providing information such as a control resource set identity, a frequency location of the control resource set, and a symbol length of the control resource set. For example, the information of Table 7 may be included.

【Table 7】

```
ControlResourceSet ::=                                    SEQUENCE {

        -- Corresponds to L1 parameter 'CORESET-ID'


        controlResourceSetId

        ControlResourceSetId,

    (control resource set identity)

        frequencyDomainResources                          BIT    STRING

(SIZE (45)),

    (frequency axis resource allocation information)

        duration

        INTEGER (1..maxCoReSetDuration),

    (time axis resource allocation information)

        cce-REG-MappingType

        CHOICE {

    (CCE-to-REG mapping scheme)

            interleaved

            SEQUENCE {


                reg-BundleSize

            ENUMERATED {n2, n3, n6},

        (REG bundle size)


                precoderGranularity

            ENUMERATED {sameAsREG-bundle, allContiguousRBs},


                interleaverSize

            ENUMERATED {n2, n3, n6}
```

```
                              (interleaver size)


                              shiftIndex
                              INTEGER(0..maxNrofPhysicalResourceBlocks-1)
                                                              OPTIONAL
                          (interleaver shift)
              },
                  nonInterleaved                                    NULL
              },
              tci-StatesPDCCH
              SEQUENCE(SIZE (1..maxNrofTCI-StatesPDCCH)) OF TCI-StateId
                              OPTIONAL,
        (QCL configuration information)
              tci-PresentInDCI
              ENUMERATED {enabled}


              OPTIONAL,      -- Need S
        }
```

In [Table 7], tci-StatesPDCCH (referred to as a transmission configuration indication (TCI) state) configuration information may include information on one or a plurality of synchronization signal (SS)/physical broadcast channel (PBCH) block indexes or channel state information reference signal (CSI-RS) indexes having the Quasi Co-Located (QCL) relationship with a DMRS transmitted in the corresponding CORESET.

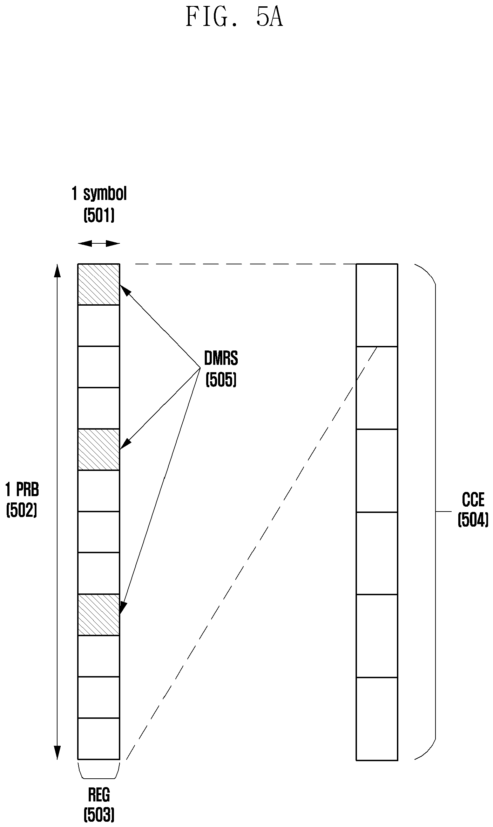

FIG. 5A illustrates an example of a basic unit of time and frequency resources included in a downlink control channel which can be used in a 5G system. Referring to FIG. 5A, the basic unit of time and frequency resources included in the control channel may be a resource element group (REG) 503, and the REG 503 may be defined as 1 OFDM symbol 501 in the time axis and 1 physical resource block (PRB) 502 in the frequency axis, that is, as 12 subcarriers. The BS may configure a downlink control channel allocation unit by concatenating the REGs 503.

As illustrated in FIG. 5A, when the basic unit for allocation of the downlink control channel in the 5G system is a control channel eminent (CCE) 504, 1 CCE 504 may include a plurality of REGs 503. In a description of the REG 503 illustrated in FIG. 5A by way of example, the REG 503 may include 12 REs and, when 1 CCE 504 includes 5 REGs 503, 1 CCE 504 may include 72 REs. When a downlink CORESET is configured, the corresponding area may include a plurality of CCEs 504, and a specific downlink control channel may be mapped to one or a plurality of CCEs 504 according to an aggregation level (AL) within the CORESET and then transmitted. CCEs 504 within the CORESET may be distinguished by numbers and the numbers of the CCEs 504 may be assigned according to a logical mapping scheme.

The basic unit of the downlink control channel illustrated in FIG. 5A, that is, the REG 503, may include all of the REs to which the DCI is mapped and the areas to which DMRSs 505, which are reference signals for decoding the REs, are mapped. As illustrated in FIG. 5A, 3 DMRSs 505 may be transmitted in 1 REG 503 The number of CCEs required to transmit the PDCCH may be 1, 2, 4, 8, or 15 according to the aggregation level (AL), and the different number of CCEs may be used to implement link adaptation of the downlink control channel. For example, if AL=L, one downlink control channel may be transmitted through L CCEs. The UE should detect a signal in the state in which the UE does not know information on the downlink control channel, and a search space indicating a set of CCEs is defined to perform blind decoding in a wireless communication system (for example, 5G or NR system) according to an embodiment of the disclosure. The search space is a set of downlink control channel candidates including CCEs for which the UE should attempt decoding at the given aggregation level, and there are several aggregation levels at which one set of CCEs is configured by 1, 2, 4, 8, and 15 CCEs, so that the UE may have a plurality of search spaces. A search space set may be defined as a set of search spaces at all the configured aggregation levels.

The search space may be classified into a common search space and a UE-specific search space. UEs in a predetermined group or all UEs may search for a common search space of the PDCCH in order to receive cell-common control information such as dynamic scheduling for system information or paging messages. For example, PDSCH scheduling allocation information for transmission of an SIB including information on a service provider of a cell may be received by searching for (monitoring) a common search space of the PDCCH. In the case of the common search space, UEs in a predetermined group or all UEs should receive the PDCCH, so that the common-search space may be defined as a set of pre-arranged CCEs. Scheduling allocation information for the UE-specific PDSCH or PUSCH may be received by searching for a UE-specific search space of the PDCCH. The UE-specific search space may be UE-specifically defined as a UE identity and a function of various system parameters.

A parameter for a search space of a PDCCH in 5G may be configured in the UE by the BS through higher-layer signaling (for example, SIB, MIB, or RRC signaling). For example, the BS may configure, in the UE, the number of PDCCH candidates at each aggregation level L, a monitoring period of the search space, a monitoring occasion in units of symbols within the slot for the search space, a search space type, that is, a common search space or a UE-specific search space, a combination of a DCI format and an RNTI to be monitored in the corresponding search space, and a control resource set index for monitoring the search space. For example, the information of Table 8 may be included.

【Table 8】

| | |
|---|---|
| SearchSpace ::= | SEQUENCE { |
| -- Identity of the search space. SearchSpaceId = 0 identifies the SearchSpace configured via PBCH (MIB) or ServingCellConfigCommon. | |
| searchSpaceId | |
| SearchSpaceId, | |
| (search space identifier) | |
| controlResourceSetId | |
| ControlResourceSetId, | |
| (control resource set identifier) | |
| monitoringSlotPeriodicityAndOffset | CHOICE { |
| (monitoring slot level period) | |
| sl1 | |
| NULL, | |
| sl2 | |
| INTEGER (0..1), | |
| sl4 | |
| INTEGER (0..3), | |

```
                                sl5
                                INTEGER (0..4),
                                sl8
                                        INTEGER (0..7),
                                sl10
                                INTEGER (0..9),
                                sl16
                                INTEGER (0..15),
                                sl20
                                INTEGER (0..19)
                            }


                                            OPTIONAL,
                    duration (monitoring length)                    INTEGER (2..2559)
                            monitoringSymbolsWithinSlot                                 BIT
            STRING (SIZE (14))
                                                    OPTIONAL,
                    (monitoring symbol within slot)
                            nrofCandidates
                            SEQUENCE {
                    (number of PDCCH candidates at each aggregation level)
                                    aggregationLevel1
                    ENUMERATED {n0, n1, n2, n3, n4, n5, n6, n8},
                                    aggregationLevel2
                    ENUMERATED {n0, n1, n2, n3, n4, n5, n6, n8},
                                    aggregationLevel4
                    ENUMERATED {n0, n1, n2, n3, n4, n5, n6, n8},
                                    aggregationLevel8
                    ENUMERATED {n0, n1, n2, n3, n4, n5, n6, n8},
```

```
                aggregationLevel16

                ENUMERATED {n0, n1, n2, n3, n4, n5, n6, n8}

            },


                searchSpaceType

            CHOICE {

            (search space type)

                    -- Configures this search space as common search space (CSS) and

DCI formats to monitor.

                common

                SEQUENCE {

            (common search space)

            }

                ue-Specific

                SEQUENCE {

            (UE-specific search space)

                        -- Indicates whether the UE monitors in this USS for DCI

formats 0-0 and 1-0 or for formats 0-1 and 1-1.

                formats

                ENUMERATED {formats0-0-And-1-0, formats0-1-And-

1-1},

                    ...

            }
```

The BS may configure one or a plurality of search space sets in the UE according to configuration information. According to some embodiments, the BS may configure search space set 1 and search space 2 in the UE, and the configuration may be performed such that DCI format A scrambled by an X-RNTI in search space set 1 is monitored in the common search space and DCI format B scrambled by a Y-RNTI in search space set 2 is monitored in the UE-specific search space.

According to configuration information, one or a plurality of search space sets may exist in the common search space or the UE-specific search space. For example, search space set #1 and search space set #2 may be configured as common search spaces, and search space set #3 and search space set #4 may be configured as UE-specific search spaces.

In the common search space, the following combinations of DCI formats and RNTIs may be monitored. Of course, the disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI

# EP 4 472 122 A1

- DCI format 2_3 with CRC scrambled by TPC-SRS-RNTI

In the UE-specific search space, the following combinations of DCI formats and RNTIs may be monitored. Of course, the disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The described RNTIs may follow the following definition and use.

- Cell RNTI (C-RNTI): used for scheduling UE-specific PDSCH

- Temporary Cell RNTI(TC-RNTI): used for UE-specific PDSCH scheduling

- Configured Scheduling (CS)-RNTI: used for semi-statically configured UE-specific PDSCH scheduling

Random Access RNTI (RA-RNTI): used for PDSCH scheduling at random access stage

- Paging RNTI (P-RNTI): used for PDSCH scheduling through which paging is transmitted
- System Information RNTI (SI-RNTI): used for PDSCH scheduling through which system information is transmitted
- Interruption RNTI (INT-RNTI): used for indicating whether puncturing is performed for PDSCH
- Transmit Power Control for PUSCH RNTI (TPC-PUSCH-RNTI): used for indicating PUSCH power control command
- Transmit Power Control for PUCCH RNTI (TPC-PUCCH-RNTI): used for indicating PUCCH power control command
- Transmit Power Control for SRS RNTI (TPC-SRS-RNTI): used for indicating SRS power control command

The DCI formats may follow the following definition.

[Table 9]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

A control resource set p and a search space of an aggregation level L in a search space set s in 5G may be expressed as [Equation 1] below.

[Equation 1]

$$L \cdot \left\{ \left( Y_{p,n_{s,f}^{\mu}} + \left\lfloor \frac{m_{s,n_{CI}} \cdot N_{\mathrm{CCE},p}}{L \cdot M_{p,s,\max}^{(L)}} \right\rfloor + n_{CI} \right) \bmod \left\lfloor N_{\mathrm{CCE},p}/L \right\rfloor \right\} + i$$

- L: aggregation level
- $n_{CI}$: carrier index
- $N_{\mathrm{CCE},p}$: total number of CCEs existing within control resource set p
- $n_{s,f}^{\mu}$: slot index
- $M_{p,s,\max}^{(L)}$: number of PDCCH candidates at aggregation level L

18

- $m_{s,n_{CI}} = 0, \cdots, M^{(L)}_{p,s,max} - 1$ : PDCCH candidate index for aggregation level L
- i=0,...,L-1

- $Y_{p,n^\mu_{s,f}} = \left( A_p \cdot Y_{p,n^\mu_{s,f}-1} \right) mod D$ , $Y_{p,-1} = n_{RNTI} \neq 0$ , A0=39827, A1=39829, A2=39839, D=65537.

- $n_{RNT1}$: terminal identity

For a common search space, $Y_{p,n^\mu_{s,f}}$ may correspond to 0

For a UE-specific search space, the value of $Y_{p,n^\mu_{s,f}}$ may correspond to a value varying depending on the terminal's identity (C-RNTI or ID configured for the terminal by the base station) and the time index.

In 5G, a set of search space sets monitored by the UE at every time point may vary as a plurality of search space sets can be configured as different parameters (for example, the parameters in [Table 10]). For example, when search space set #1 is configured on an X-slot period, search space set #2 is configured on a Y-slot period, and X and Y are different from each other, the UE may monitor all of search space set #1 and search space set #2 in a specific slot and monitor one of search space set #1 and search space set #2 in another specific slot.

The UE may report a UE capability in the case in which a plurality of PDCCH monitoring locations exist within the slot and, at this time, the concept "span" may be used. The span is consecutive symbols in which the UE can monitor a PDCCH within the slot, and each PDCCH monitoring location may be within 1 span. The span may be expressed by (X,Y), in which X refers to the minimum number of symbols which should be spaced apart between first symbols of two consecutive spans and Y refers to the number of consecutive symbols for monitoring a PDCCH within 1 span. At this time, the UE may monitor the PDCCH in a section within Y symbols from the first symbol of the span within the span.

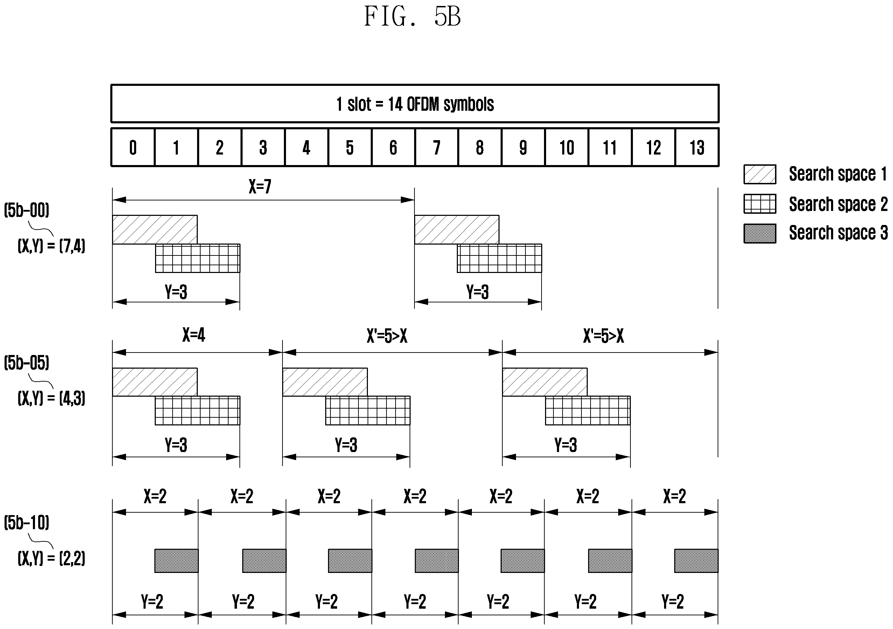

FIG. 5B illustrates the case in which the UE may have a plurality of PDCCH monitoring locations within the slot through the span in a wireless communication system. The span can be expressed by (X,Y) = (7,4), (4,3), and (2,2), and the three cases are expressed as (5b-00), (5b-05), and (5b-10) in FIG. 5B. For example, (5b-00) indicates the case in which the number of spans which can be expressed by (7,4) is 2 in the slot. An interval between first symbols of the 2 spans is expressed as X=7, a PDCCH monitoring location may exist within a total of Y=3 symbols from the first symbol of each span, and search spaces 1 and 2 exist within Y=3 symbols. In another example, (5b-05) indicates the case in which a total number of spans which can be expressed by (4,3) is 3 in the slot, and an interval between a second span and a third span is X'=5 symbols larger than X=4

[DRX]

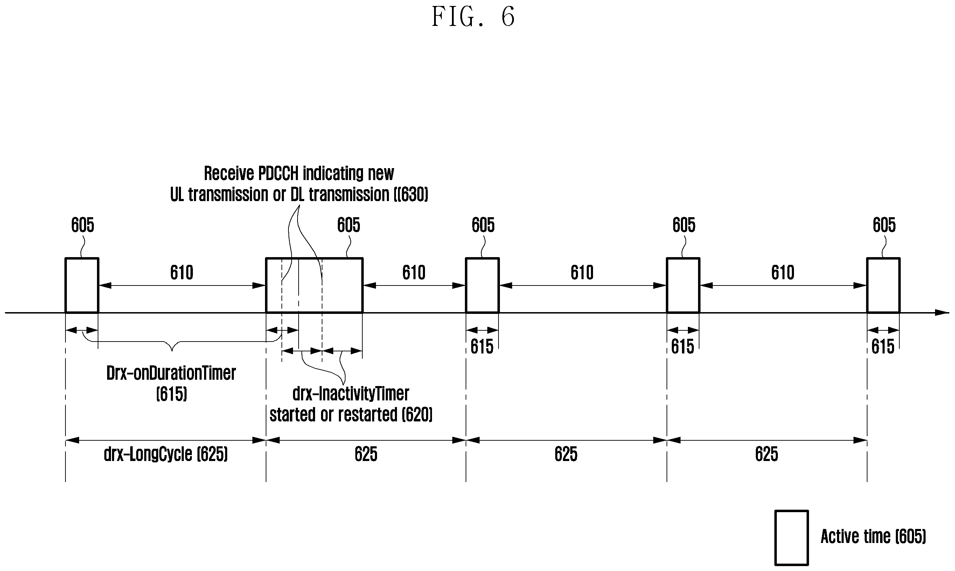

FIG. 6 illustrates an example of a DRX operation.

Discontinuous reception (DRX) is an operation in which the UE using a service discontinuously receives data in an RRC-connected state in which a radio link is established between the BS and the UE. When DRX is applied, the UE may turn on a receiver at a specific time point and monitor a control channel, and when there is no data received for a predetermined period, turn off the receiver to reduce power consumption of the UE. The DRX operation may be controlled by a MAC layer device on the basis of various parameters and a timer.

Referring to FIG. 6, an active time 605 is a time during which the UE wakes up every DRX cycle and monitors a PDCCH. The active time 605 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, ra-ContentionResolutionTimer, and the like are timers of which values are configured by the BS, and have functions configured to monitor a PDCCH by the UE in the state in which a predetermined condition is satisfied.

The drx-onDurationTimer 615 is a parameter for configuring a minimum time during which the UE is awake in a DRX cycle. The drx-InactivityTimer 620 is a parameter for configuring a time during which the UE is additionally awake when a PDCCH indicating new uplink transmission or downlink transmission is received as indicated by reference numeral 630. The drx-RetransmissionTimerDL is a parameter for configuring a maximum time during which the UE is awake in order to receive downlink retransmission in a downlink HARQ procedure. The drx-RetransmissionTimerUL is a parameter for configuring a maximum time during which the UE is awake in order to receive a grant of uplink retransmission in an uplink HARQ procedure. The drx-onDurationTimer, drx-InactivityTimer, drx-RetransmissionTimerDL, and drx-RetransmissionTimerUL may be configured as, for example, a time, the number of subframes, the number of slots, and the like. The ra-ContentionResolutionTimer is a parameter for monitoring a PDCCH in a random access procedure.

An inactive time 610 is a time in which no PDCCH monitoring is performed or a time in which no PDCCH reception is performed during the DRX operation, and the remaining time except for the active time 605 in the entire time in which the DRX operation is performed. When the PDCCH is not monitored during the active time 605, the UE may enter a sleep or inactive state and reduce power consumption.

The DRX cycle refers to a cycle on which the UE wakes up and monitors a PDCCH. That is, the DRX cycle is a time interval or a cycle of on duration from monitoring of the PDCCH to monitoring of the next PDCCH by the UE. The DRX cycle has two types such as a short DRX cycle and a long DRX cycle. The short DRX cycle may be optionally applied.

The long DRX cycle 625 is a longer cycle among the two DRX cycles configured in the UE. The UE starts the drx-onDurationTimer 615 at a time point at which the long DRX cycle 625 passes after a start point (for example, a start symbol) of the drx-onDurationTimer 615 while the long DRX cycle operates. In the operation of the long DRX cycle 625, the UE may start the drx-onDurationTimer 615 in a slot after drx-SlotOffset in a subframe that satisfies [Equation 2] below. Here, the drx-SlotOffset is a delay before the drx-onDurationTimer 615 starts. The drx-SlotOffset may be configured as, for example, a time, the number of slots, or the like.

$$[\text{Equation 2}]$$
$$[(\text{SFN} \times 10) + \text{subframe number}] \bmod (\text{drx-LongCycle}) = \text{drx-StartOffset}$$

The drx-LongCycleStartOffset and drx-StartOffset may be used to define a subframe for starting the Long DRX cycle 625. The drx-LongCycleStartOffset may be configured as, for example, a time, the number of subframes, the number of slots, or the like.

[QCL, TCI state]

In the wireless communication system, one or more different antenna ports (or replaced with one or more channels, signals, and combinations thereof, but commonly referred to as different antenna ports for convenience in the following description of the disclosure) may be associated by a quasi co-location (QCL) configuration shown in [Table 18] below. The TCI state is to inform of a QCL relation between a PDCCH (or a PDCCH DMRS) and another RS or channel, and a reference antenna port A (reference RS #A) and another purpose antenna port B (target RS #B) which are quasi co-located (QCLed) means that the UE is allowed to apply some or all of large-scale channel parameters estimated in the antenna port A to channel measurement from the antenna port B. The QCL is required to associate different parameters according to conditions such as 1) time tracking influenced by average delay and delay spread, 2) frequency tracking influenced by Doppler shift and Doppler spread, 3) radio resource management (RRM) influenced by an average gain, and 4) beam management (BM) influenced by a spatial parameter. Accordingly, NR supports four types of QCL relations shown in [Table 10] below.

[Table 10]

| QCL type | Large-scale characteristics |
| --- | --- |
| A | Doppler shift, Doppler spread, average delay, delay spread |
| B | Doppler shift, Doppler spread |
| C | Doppler shift, average delay |
| D | Spatial Rx parameter |

A spatial RX parameter may refer to some or all of various parameters such as angle of arrival (AoA), power angular spectrum (PAS) of AoA, angle of departure (AoD), PAS of AoD, transmit/receive channel correlation, transmit/receive beamforming, and spatial channel correlation.

The QCL relation can be configured in the UE through RRC parameter TCI-state and QCL-Info as shown in [Table 11] below. Referring to [Table 11] below, the BS may configure one or more TCI states in the UE and inform the UE of a maximum of two QCL relations (qcl-Type 1 and qcl-Type 2) for an RS referring to an ID of the TCI state, that is, a target RS.

At this time, each piece of the QCL information (QCL-Info) included in the TCI state includes a serving cell index and a BWP index of a reference RS indicated by the corresponding QCL information, a type and an ID of the reference RS, and the QCL type as shown in [Table 18] above.

【Table 11】

```
TCI-State ::=                                          SEQUENCE {
        tci-StateId                                          TCI-
StateId,
        (ID of corresponding TCI state)
        qcl-Type1                                          QCL-
Info,
        (QCL  information  of  first  reference  RS  of  RS  (target  RS)  referring  to
corresponding TCI state ID)
        qcl-Type2                                          QCL-
Info                          OPTIONAL,      -- Need R
        (QCL  information  of  second  reference  RS  of  RS  (target  RS)  referring  to
corresponding TCI state ID)
        ...
}


QCL-Info ::=                                          SEQUENCE {
        cell
        ServCellIndex                          OPTIONAL,      -- Need R
        (serving  cell  index  of  reference  RS  indicated  by  corresponding  QCL
information)
        bwp-Id                                          BWP-Id
                                        OPTIONAL,  --  Cond  CSI-RS-
Indicated
        (BWP index of reference RS indicated by corresponding QCL information)
        referenceSignal                                          CHOICE {
                csi-rs
        NZP-CSI-RS-ResourceId,
```

```
                    ssb

                    SSB-Index

                    (one of CSI-RSI ID or SSB ID indicated by corresponding QCL

        information)

                    },

                    qcl-Type

                    ENUMERATED {typeA, typeB, typeC, typeD},

                    …

        }
```

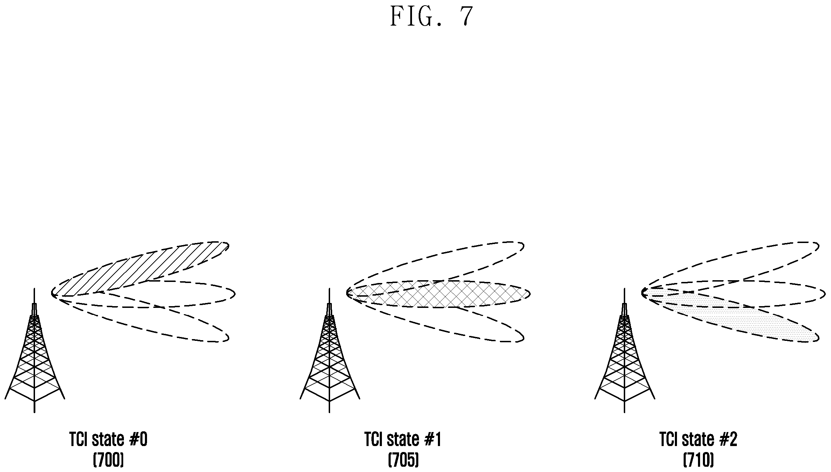

FIG. 7 illustrates an example of BS beam allocation according to a TCI state configuration. Referring to FIG. 7, the BS may transmit information on N different beams to the UE through N different TCI states. For example, when N=3 as illustrated in FIG. 7, the BS may notify that a qcl-Type 2 parameter included in three TCI states 700, 705, and 710 is associated with a CSI-RS or SSB corresponding to different beams to be configured as QCL type D and antenna ports referring to the different TCI states 700, 705, and 710 are associated with different spatial Rx parameters, that is, different beams.

[Table 12] to [Table 16] below show valid TCI state configurations according to the target antenna port type.

[Table 12] shows valid TCI state configurations when the target antenna port is a CSI-RS for tracking (TRS). The TRS is an NZP CSI-RS for which a repetition parameter is not configured and trs-Info is configured as true among CSI-RSs. The third configuration in [Table 12] may be used for an aperiodic TRS.

[Table 12]

| Valid TCI state Configuration | DL RS 1 | qcl-Type 1 | DL RS 2 (if configured) | qcl-Type 2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

[Table 13] shows valid TCI state configurations when the target antenna port is a CSI-RS for CSI. The CSI-RS for CSI is an NZP CSI-RS for which a parameter (for example, a repetition parameter) indicating repetition is not configured and trs-Info is not configured as true among the CSI-RSs.

[Table 13]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

[Table 14] shows valid TCI state configurations when the target antenna port is a CSI-RS for beam management (BM) (that is, the same meaning as a CSI-RS for L1 RSRP reporting). The CSI-RS for BM is an NZP CSI-RS for which a repetition parameter is configured to have a value of on or off and trs-Info is not configured as true.

[Table 14]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH | QCL-TypeC | SS/PBCH block | QCL-TypeD |

[Table 15] shows valid TCI state configurations when the target antenna port is a PDCCH DMRS.

[Table 15]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

[Table 16] shows valid TCI state configurations when the target antenna port is a PDCCH DMRS.

[Table 16]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

In a representative QCL configuration method by [Table 12] to [Table 16], the target antenna port and the reference antenna port for each step are configured and operated as "SSB" -> "TRS" -> "CSI-RS for CSI, CSI-RS for BM, PDCCH DMRS, or PDSCH DMRS". In a representative QCL configuration method by [Table 20] to [Table 24], the target antenna port and the reference antenna port for each step are configured and operated as "SSB" -> "TRS" -> "CSI-RS for CSI, CSI-RS for BM, PDCCH DMRS, or PDSCH DMRS".

[Regarding PDCCH: TCI state]

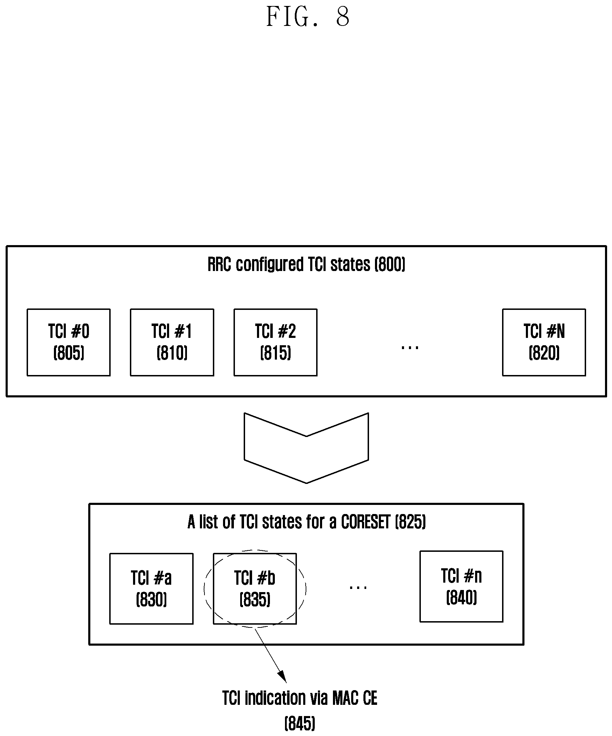

FIG. 8 illustrates an example of a method of allocating TCI states for a PDCCH in a wireless communication system according to an embodiment of the disclosure.
TCI state combinations which can be applied to the PDCCH DMRS antenna port may be as shown in [Table 17] below. In [Table 17], a fourth row is a combination assumed by the UE before the RRC configuration, and configurations after RRC are impossible.

[Table 17]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

In NR, a hierarchical signaling method as illustrated in FIG. 8 is supported for dynamic allocation for a PDCCH beam. Referring to FIG. 8, the BS may configure N TCI states 805, 810, ..., 820 in the UE through RRC signaling 800 and configure some thereof as TCI states for the CORESET as indicated by reference numeral 825. Thereafter, the BS may indicate one of the TCI states 830, 835, and 840 for the CORESET to the UE through MAC CE signaling as indicated by reference numeral 845. Subsequently, the UE may receive a PDCCH on the basis of beam information included in the TCI states indicated by the MAC CE signaling.

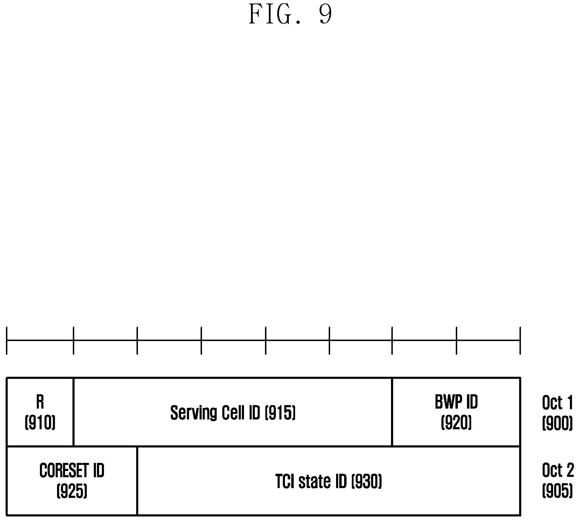

FIG. 9 illustrates a TCI indication MAC CE indication signaling structure for a PDCCH DMRS. Referring to FIG. 9, TCI indication MAC CE signaling for the PDCCH DMRS may consist of 2 bytes (16 bits), and may include a reserved bit 910 of 1 bit, a serving cell ID 915 of 5 bits, a BWP ID 920 of 2 bits, a CORESET ID 925 of 2 bits, and a TCI state ID 930 of 6 bits.

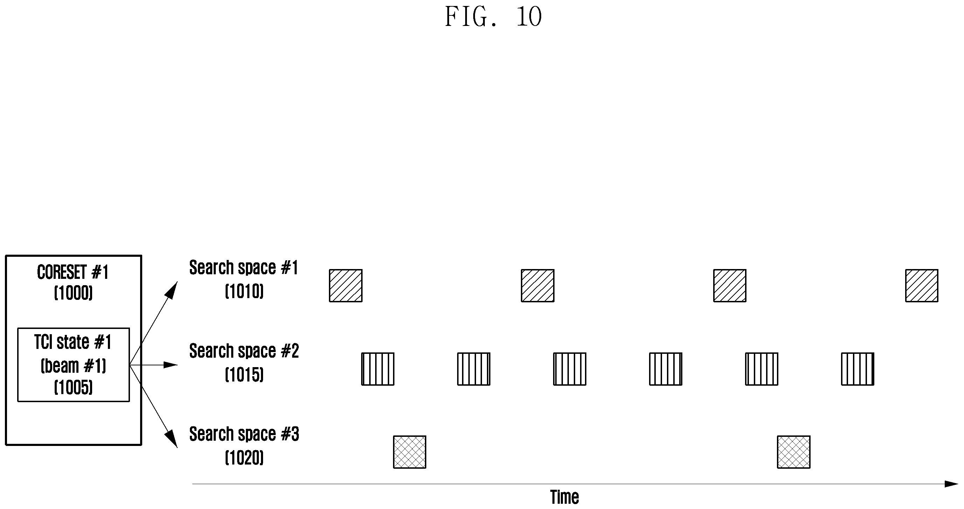

FIG. 10 illustrates an example of a CORESET and search space beam configuration according to the above description. Referring to FIG. 10, the BS may indicate one of the TCI state list included in the configuration of a CORSET 1000 through MAC CE signaling as indicated by reference numeral 1005. Thereafter, before another TCI state is indicated to the corresponding CORSET through other MAC CE signaling, the UE may consider that the same QCL information (beam #1) 1005 is applied to one or more search spaces 1010, 1015, and 1020 associated with the CORESET. The PDCCH beam allocation method has difficulty in indicating a beam change earlier than a MAC CE signaling delay and has a disadvantage of applying the same beam to all CORESETs regardless of a search space characteristic, and thus makes flexible PDCCH beam operation difficult. Hereinafter, embodiments of the disclosure provide a more flexible PDCCH beam configuration and operation method. In the following embodiments of the disclosure, some distinguished examples are provided for convenience of description, but they are not exclusive and can be applied through a proper combination thereof according to circumstances.

The BS may configure one or a plurality of TCI states for a specific CORESET in the UE and activate one of the configured TCI states through a MAC CE activation command. For example, {TCI state#0, TCI state#1, TCI state#2} are configured in CORESET #1 as the TCI states, and the BS may transmit a command for activating TCI state#0 assumed as the TCI state for CORESET #1 to the UE through the MAC CE. The UE may correctly receive a DMRS of the corresponding CORESET on the basis of QCL information within the activated TCI state by means of the activation command for the TCI state received through the MAC CE.

When the UE does not receive the MAC CE activation command for the TCI state of CORESET #0 for the CORESET (CORESET #0) having an index of 0, the UE may assume that a DMRS transmitted in CORESET #0 is QCLed with an SS/PBCH block identified in an initial access process or a non-contention-based random access process which is not triggered by a PDCCH command.

When the UE does not receive a configuration of the TCI state for CORESET #X or the UE receives the configuration of one or more TCI states but does not receive a MAC CE activation command for activating one thereof, the UE may assume that a DMRS transmitted in CORESET #X is QCLed with an SS/PBCH block identified in an initial access process.

[Regarding terminal capability reporting]

In the LTE and 5G, the UE may perform a procedure for reporting a capability supported by the UE to the corresponding BS in the state in which the UE is connected to a serving BS. In the following description, this is referred to as a UE capability report.

The BS may transmit a UE capability enquiry message that makes a request for a capability report to the UE in the connected state. The message may include a UE capability request for each radio access technology (RAT) type of the BS. The request for each RAT type may include supported frequency band combination information. In the case of the UE capability enquiry message, a plurality of UE capabilities for respective RAT types may be requested through one RRC message container transmitted by the BS or the BS may insert the UE capability enquiry message including the UE capability request for each RAT type multiple times and transmit the same to the UE. That is, the UE capability enquiry is repeated multiple times within one message and the UE may configure a UE capability information message corresponding thereto and report the same multiple times. In the next-generation mobile communication system, a UE capability request for NR, LTE, E-UTRA - NR dual connectivity (EN-DC), and multi-RAT dual connectivity (MR-DC) may be made. The UE capability enquiry message is generally transmitted initially after the UE is connected to the BS, but may be requested at any time when the BS needs the same.

The UE receiving the request for the UE capability report from the BS in the above step may configure a UE capability according to RAT type and band information requested by the BS. A method by which the UE configures the UE capability in a wireless communication system (for example, 5G or NR system) according to an embodiment of the disclosure is described below.

1. When the UE receives a list of LTE and/or NR bands from the BS through a UE capability request, the UE configures a band combination (BC) for EN-DC and NR stand alone (SA). That is, the UE configures a candidate list of BCs for EN-DC and NR SA on the basis of requested bands in FreqBandList. The bands sequentially have priorities as stated in FreqBandList.

2. When the BS sets a "eutra-nr-only" flag or an "eutra" flag and makes a request for the UE capability report, the UE completely removes NR SA BCs from the configured candidate list of BCs. Such an operation may occur only when the LTE BS (eNB) makes a request for an "eutra" capability.

3. Thereafter, the UE removes fallback BCs from the candidate list of BCs configured in the above stage. The fallback BC is a BC which can be obtained by removing a band corresponding to at least one SCell from a predetermined BC, and a BC before the removal of the band corresponding at least one SCell can cover the fallback BC and thus the fallback BC can be omitted. This stage is applied to MR-DC, that is, LTE bands. BCs left after the stage are a final "candidate BC list".

4. The UE selects BCs suitable for a requested RAT type in the final "candidate BC list" and selects BCs to be reported. In this stage, the UE configures supportedBandCombinationList according to a determined order. That is, the UE configures BCs and UE capability to be reported according to an order of a preset rat-Type (nr ->eutra-nr ->eutra). Further, the UE configures featureSetCombination for the configured supportedBandCombinationList and configures a list of "candidate feature set combination" in a candidate BC list from which a list for fallback BCs (including capability at the same or lower stage) is received. The "candidate feature set combination" may include all feature set combinations for NR and EUTRA-NR BCs, and may be acquired from a feature set combination of UE-NR-Capabilities and UE-MRDC-Capabilities containers.

5. When the requested rat Type is eutra-nr and influences, featureSetCombinations are included in all of the two containers of LTE-MRDC-Capabilities and UE-NR-Capabilities. However, the NR feature set includes only UE-NR-Capabilities.

After configuring the UE capability, the UE may transfer a UE capability information message including the UE capability to the BS. The BS may perform scheduling for the corresponding UE and transmission/reception management on the basis of the UE capability received from the UE.

[Regarding NC-JT]

According to an embodiment of the disclosure, in order to receive a PDSCH from a plurality of TRPs, the UE may use non-coherent joint transmission (NC-JT).

A 5G wireless communication system may support all of the service having very short transmission latency and the service requiring a high connectivity density as well as the service requiring a high transmission rate unlike the conventional system. In a wireless communication network including a plurality of cells, transmission and reception points (TRPs), or beams, cooperative communication (coordinated transmission) between respective cells, TRPs, or/and beams may satisfy various service requirements by increasing the strength of a signal received by the UE or efficiently controlling interference between the cells, TRPs, or/and beams.

Joint transmission (JT) is a representative transmission technology for the cooperative communication and may increase the strength of a signal received by the UE or throughput by transmitting signals to one UE through different cells, TRPs, or/and beams. At this time, a channel between each cell, TRP, or/and beam and the UE may have different characteristics, and particularly, non-coherent joint transmission (NC-JT) supporting non-coherent precoding between respective cells, TRPs, or/and beams may need individual precoding, MCS, resource allocation, and TCI indication according to the channel characteristics for each link between each cell, TRP, or/and beam and the UE.

The NC-JT may be applied to at least one of a downlink data channel (physical downlink shared channel (PDSCH)), a downlink control channel (physical downlink control channel (PDCCH)), an uplink data channel (physical uplink shared channel (PUSCH)), and an uplink control channel (Physical uplink control channel (PUCCH)). In PDSCH transmission, transmission information such as precoding, MCS, resource allocation, and TCI may be indicated through DL DCI, and should be independently indicated for each cell, TRP, or/and beam for the NC-JT. This is a main factor that increases payload required for DL DCI transmission, which may have a bad influence on reception performance of a PDCCH for transmitting the DCI. Accordingly, in order to support JT of the PDSCH, it is required to carefully design tradeoff between an amount of DCI information and reception performance of control information.

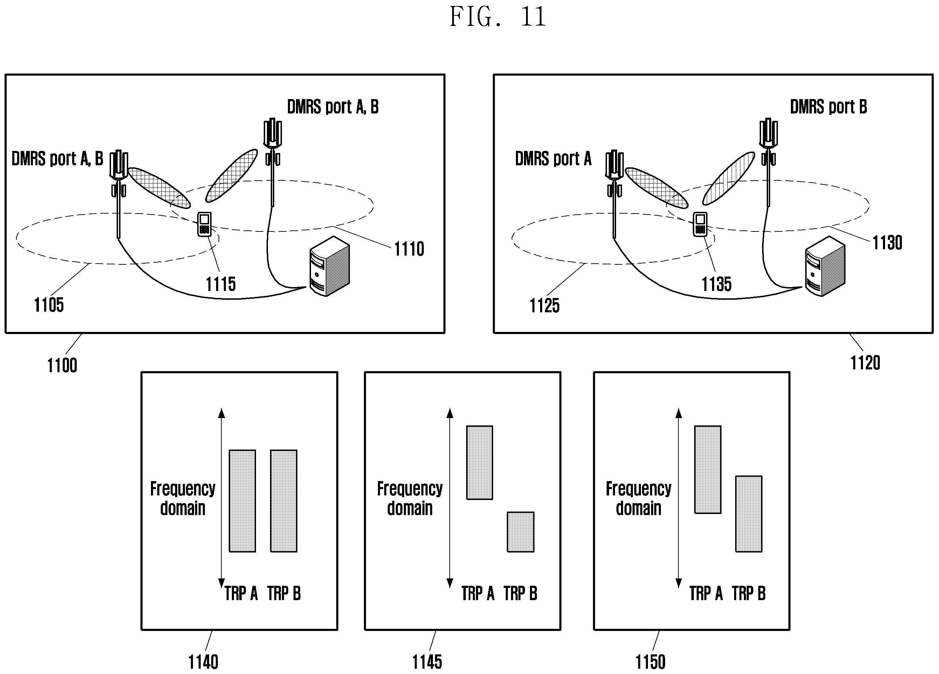

FIG. 11 illustrates a configuration of antenna ports and an example of resource allocation for transmitting a PDSCH using cooperative communication in a wireless communication system according to an embodiment of the disclosure.

Referring to FIG. 11, the example for PDSCH transmission is described for each scheme of joint transmission (JT), and examples for allocating radio resources for each TRP are described.

Referring to FIG. 11, an example 1100 of coherent joint transmission (C-JT) supporting coherent precoding between respective cells, TRPs, or/and beams is illustrated.

In the case of C-JT, a TRP A 1105 and a TRP B 1110 transmit single data (PDSCH) to a UE 1115, and the plurality of TRPs may perform joint precoding. This may mean that the TRP A 1105 and the TPR B 1110 transmit DMRSs through the same DMRS ports in order to transmit the same PDSCH. For example, the TRP A 1105 and the TPR B 1110 may transmit DMRSs to the UE through a DMRS port A and a DMRS port B, respectively. In this case, the UE may receive one piece of DCI information for receiving one PDSCH demodulated on the basis of the DMRSs transmitted through the DMRS port A and the DMRS port B.

FIG. 11 illustrates an example 1120 of non-coherent joint transmission (NC-JT) supporting non-coherent precoding between respective cells, TRPs, or/and beams for PDSCH transmission.

In the case of NC-JT, the PDSCH is transmitted to a UE 1135 for each cell, TPR, or/and beam, and individual precoding may be applied to each PDSCH. Respective cells, TRPs, or/and beams may transmit different PDSCHs or different PDSCH layers to the UE, thereby improving throughput compared to single cell, TRP, or/and beam transmission. Further, respective cells, TRPs, or/and beams may repeatedly transmit the same PDSCH to the UE, thereby improving reliability compared to single cell, TRP, or/and beam transmission. For convenience of description, the cell, TRP, or/and beam are commonly called a TRP.

At this time, various wireless resource allocations such as the case 1140 in which frequency and time resources used by a plurality of TRPs for PDSCH transmission are all the same, the case 1145 in which frequency and time resources used by a plurality of TRPs do not overlap at all, and the case 1150 in which some of the frequency and time resources used by a plurality of TRPs overlap each other may be considered.

In order to support NC-JT, DCIs in various forms, structures, and relations may be considered to simultaneously allocate a plurality of PDSCHs to one UE.

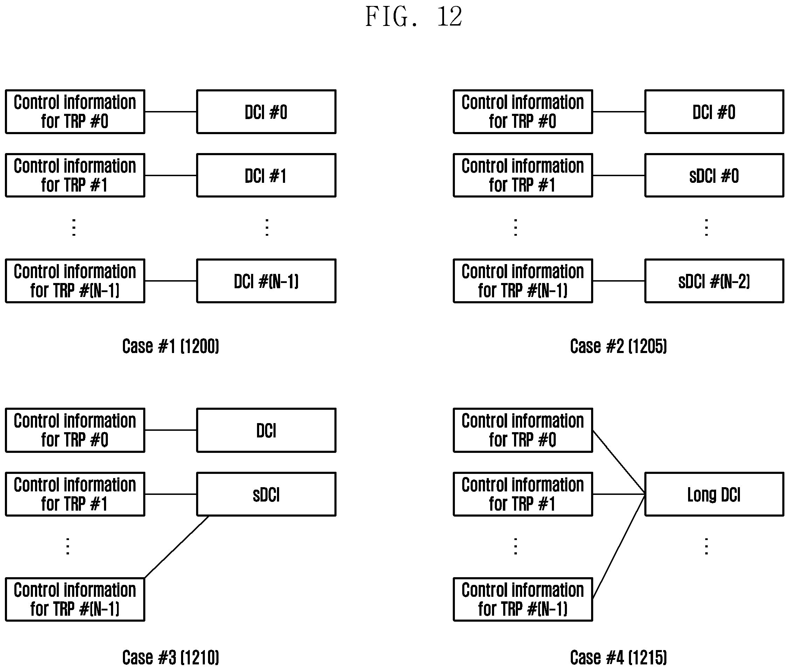

FIG. 12 illustrates an example for a configuration of downlink control information (DCI) for NC-JT in which respective TRPs transmit different PDSCHs or different PDSCH layers to the UE in a wireless communication system according to an embodiments of the disclosure.

Referring to FIG. 12, case #1 1200 is an example in which control information for PDSCHs transmitted from (N-1) additional TRPs is transmitted independently from control information for a PDSCH transmitted by a serving TRP in a situation in which (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP #(N-1)) through independent DCIs (DCI #0 to DCI #(N-1)). Formats between the independent DCIs may be the same as or different from each other, and payload between the DCIs may also be the same as or different from each other. In case #1, a degree of freedom of PDSCH control or allocation can be completely guaranteed, but when respective pieces of DCI are transmitted by different TRPs, a difference between DCI coverages may be generated and reception performance may deteriorate.

Case #2 1205 is an example in which pieces of control information for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI #0 that is control information for a PDSCH transmitted from the serving TRP (TRP #0) may include all information elements of DCI format 1_0, DCI format 1_1, and DCI format 1_2, but shortened DCIs (hereinafter, referred to as sDCIs) (sDCI #0 to sDCI #(N-2)) that are control information for PDSCHs transmitted from the cooperative TRPs (TRP #1 to TRP #(N-1)) may include only some of the information elements of DCI format 1_0, DCI format 1_1, and DCI format 1_2. Accordingly, the sDCI for transmitting control information of PDSCHs transmitted from cooperative TPRs has smaller payload compared to the normal DCI (nDCI) for transmitting control information related to the PDSCH transmitted from the serving TRP, and thus can include reserved bits compared to the nDCI.

In case #2, a degree of freedom of each PDSCH control or allocation may be limited according to content of information elements included in the sDCI, but reception capability of the sDCI is better than the nDCI, and thus a probability of the generation of difference between DCI coverages may become lower.

Case #3 1210 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP #0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information such as frequency domain resource assignment and time domain resource assignment of the cooperative TRPs and the MCS. In addition, information that is not included in the sDCI such as a BWP indicator and a carrier indicator may follow DCI (DCI #0, normal DCI, or nDCI) of the serving TRP.

In case #3 1210, a degree of freedom of PDSCH control or allocation may be limited according to content of the information elements included in the sDCI but reception performance of the sDCI can be controlled, and case #3 1610 may have smaller complexity of DCI blind decoding of the UE compared to case #1 1200 or case #2 1205.

Case #4 1215 is an example in which control information for PDSCHs transmitted from (N-1) additional TRPs is transmitted in DCI (long DCI) that is the same as that of control information for the PDSCH transmitted from the serving TRP in a situation in which different (N-1) PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP # (N-1)) through single DCI. In case #4 1215, complexity of DCI blind decoding of the UE may not be increased, but a degree of freedom of PDSCH control or allocation may be low since the number of cooperative TRPs is limited according to long DCI payload restriction.

In the following description and embodiments, the sDCI may refer to various pieces of supplementary DCI such as shortened DCI, secondary DCI, or normal DCI (DCI formats 1_0 and 1_1) including PDSCH control information transmitted in the cooperative TRP, and unless specific restriction is mentioned, the corresponding description may be similarly applied to the various pieces of supplementary DCI.

In the following description and embodiments, case #1 1200, case #2 1205, and case #3 1210 in which one or more pieces of DCI (or PDCCHs) are used to support NC-JT may be classified as multiple PDCCH-based NC-JT and case #4 1215 in which single DCI (or PDCCH) is used to support NC-JT may be classified as single PDCCH-based NC-JT. In multiple PDCCH-based PDSCH transmission, a CORESET for scheduling DCI of the serving TRP (TRP #0) is separated from CORESETs for scheduling DCI of cooperative TRPs (TRP #1 to TRP #(N-1)). A method of distinguishing the CORESETs may include a distinguishing method through a higher-layer indicator for each CORESET and a distinguishing method through a beam configuration for each CORESET. Further, in single PDCCH-based NC-JT, single DCI schedules a single PDSCH having a plurality of layers instead of scheduling a plurality of PDSCHs, and the plurality of layers may be transmitted from a plurality of TRPs. At this time, association between a layer and a TRP transmitting the corresponding layer may be indicated through a transmission configuration indicator (TCI) indication for the layer.

In embodiments of the disclosure, the "cooperative TRP" may be replaced with various terms such as a "cooperative panel" or a "cooperative beam" when actually applied.

In embodiments of the disclosure, "the case in which NC-JT is applied" may be variously interpreted as "the case in which the UE simultaneously receives one or more PDSCHs in one BWP", "the case in which the UE simultaneously receives PDSCHs on the basis of two or more transmission configuration indicator (TCI) indications in one BWP", and "the case in which the PDSCHs received by the UE are associated with one or more DMRS port groups" according to circumstances, but is used by one expression for convenience of description.

In the disclosure, a wireless protocol structure for NC-JT may be variously used according to a TRP development scenario. For example, when there is no backhaul delay between cooperative TRPs or there is a small backhaul delay, a method (CA-like method) using a structure based on MAC layer multiplexing can be used. On the other hand, when the backhaul delay between cooperative TRPs is too large to be ignored (for example, when a time of 2 ms or longer is needed to exchange information such as CSI, scheduling, and HARQ-ACK between cooperative TRPs), a method (DC-like method) of securing a characteristic robust to a delay can be used through an independent structure for each TRP from an RLC layer.

The UE supporting C-JT/NC-JT may receive a C-JT/NC-JT-related parameter or a setting value from a higher-layer configuration and set an RRC parameter of the UE on the basis thereof. For the higher-layer configuration, the UE may use a UE capability parameter, for example, tci-StatePDSCH. The UE capability parameter, for example, tci-StatePDSCH may define TCI states for PDSCH transmission, the number of TCI states may be configured as 4, 8, 16, 32, 64, and 128 in FR1 and as 64 and 128 in FR2, and a maximum of 8 states which can be indicated by 3 bits of a TCI field of the DCI may be configured through a MAC CE message among the configured numbers. A maximum value 128 means a value indicated by maxNumberConfiguredTCIstatesPerCC within the parameter tci-StatePDSCH which is included in capability signaling of the UE. As described above, a series of configuration processes from the higher-layer configuration to the MAC CE configuration may be applied to a beamforming indication or a beamforming change command for at least one PDSCH in one TRP.

[Regarding SRS]

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.

- usage: a configuration regarding the place of use of SRS resources referred to by SRS resource sets, and may be configured as one of "beamManagement", "codebook", "nonCodebook",and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. The individual configuration information regarding SRS resources may include time domain transmission configuration of SRS resources, and may be configured as one of "periodic", "semi-persistent", and "aperiodic" The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicity AndOffset).

The base station may activate or deactivate SRS transmission for the UE through upper layer signaling including RRC signaling or MAC CE signaling, or L1 signaling (for example, DCI). For example, the base station may activate or deactivate periodic SRS transmission for the UE through upper layer signaling. The base station may indicate activation of an SRS resource set having resource Type configured as "periodic" through upper layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through upper layer signaling.

For example, the base station may activate or deactivate semi-persistent SRS transmission for the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through upper layer signaling.

For example, the base station may trigger aperiodic SRS transmission by the UE through DCI. The base station may indicate one of aperiodic SRS triggers (aperiodicSRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. The minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in view of the place of use of the SRS resource set including the transmitted SRS resource, the minimum time interval may be determined as N2 symbols, and if the place of use of the SRS resource set is configured as "nonCodebook" or "'beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 18]

```
SRS-Resource ::=                         SEQUENCE {
    srs-ResourceId                           SRS-ResourceId,
    nrofSRS-Ports                            ENUMERATED {port1, ports2,
ports4},
    ptrs-PortIndex                           ENUMERATED {n0, n1 }
OPTIONAL,     -- Need R
    transmissionComb                         CHOICE {
```

```
        n2                                      SEQUENCE {
            combOffset-n2                           INTEGER (0..1),
            cyclicShift-n2                          INTEGER (0..7)
        },
        n4                                      SEQUENCE {
            combOffset-n4                           INTEGER (0..3),
            cyclicShift-n4                          INTEGER (0..11)
        }
    },
    resourceMapping                         SEQUENCE {
        startPosition                           INTEGER (0..5),
        nrofSymbols                             ENUMERATED  {n1, n2,
n4},
        repetitionFactor                        ENUMERATED {n1, n2, n4}
    },
    freqDomainPosition                      INTEGER (0..67),
    freqDomainShift                         INTEGER (0..268),
    freqHopping                             SEQUENCE {
        c-SRS                                   INTEGER (0..63),
        b-SRS                                   INTEGER (0..3),
        b-hop                                   INTEGER (0..3)
    },
    groupOrSequenceHopping                  ENUMERATED { neither,
groupHopping, quenceHopping },
    resourceType                            CHOICE {
        aperiodic                               SEQUENCE {
            ...
        },
        semi-persistent                         SEQUENCE {
            periodicityAndOffset-sp                             SRS-
PeriodicityAndOffset,
            ...
        },
        periodic                                SEQUENCE {
```

```
            periodicityAndOffset-p                                    SRS-
PeriodicityAndOffset,

                  ...
            }
      },
      sequenceId                            INTEGER (0..1023),
      spatialRelationInfo                   SRS-SpatialRelationInfo
OPTIONAL,     -- Need R
            ...
}
```

Configuration information spatialRelationInfo in Table 18 above is applied, with reference to one reference signal, to a beam used for SRS transmission corresponding to beam information of the corresponding reference signal. For example, configuration of spatialRelationInfo may include information as in Table 19 below.

[Table 19]

```
SRS-SpatialRelationInfo ::=       SEQUENCE {
      servingCellId                                       ServCellIndex
OPTIONAL,     -- Need S
      referenceSignal                                     CHOICE {
            ssb-Index                                     SSB-Index,
            csi-RS-Index
NZP-CSI-RS-ResourceId,
            srs
SEQUENCE {
                  resourceId
SRS-ResourceId,
                  uplinkBWP
BWP-Id
            }
      }
}
```

Referring to the above-described spatialRelationInfo configuration, an SS/PBCH block index, CSI-RS index, or SRS index may be configured as the index of a reference signal to be referred to in order to use beam information of a specific reference signal. Upper signaling reference Signal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If upper signaling reference Signal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "'csi-RS-Index", the UE may apply the reception beam which was used to receive the CSI-RS corresponding to csi-RS-Index as the transmission beam for the corresponding SRS transmission. If upper signaling referenceSignal has a configured value of "'srs", the UE may apply the reception beam which was used to transmit the SRS corresponding to srs as the transmission beam for the corresponding SRS transmission.

[Related to SRS antenna switching]

Hereinafter, SRSs for antenna switching are described.

An SRS may be used to acquire downlink (DL) channel state information (CSI) (e.g., for DL CSI acquisition). In a specific example, under a situation of a single cell or multiple cells (e.g., carrier aggregation (CA)) based on time division duplex (TDD), a base station (BS) may schedule transmission of an SRS for a user equipment (UE) and then measure the SRS transmitted from the UE. In this case, the base station may assume DL/UL reciprocity to schedule a DL signal/channel for the UE, based on the measurement using the SRS. Related to DL CSI acquisition based on an SRS, a usage of an SRS resource referred to by an SRS resource set may be configured to be antenna switching.

For example, when a specification (e.g., 3gpp TS38.214) is followed, the usage of an SRS may be configured for the base station and/or the UE by using a higher layer parameter (e.g., usage of the RRC parameter SRS-ResourceSet). The usage of the SRS may be configured to be a beam management usage, a codebook transmission usage, a non-codebook transmission usage, and an antenna switching usage.

Hereinafter, a case where the usage of SRS transmission (i.e., transmission of an SRS resource or an SRS resource set) is configured to be the antenna switching usage among the above usages is discussed in detail.

For example, in a case of a UE having partial reciprocity, SRS transmission based on antenna switching (i.e., transmission antenna switching) may be supported for DL CSI acquisition through the SRS transmission in a situation such as TDD. If antenna switching is applied, about 15 μs may be required in general as an interval between SRS resources (and/or resources between an SRS resource and a PUSCH/PUCCH) for antenna switching of the UE. In consideration of this point, a (minimum) guard period as shown in Table 20 below may be defined. Table 20 shows a minimum guard period according to numerologies.

[Table 20]

| μ | $\Delta f = 2^{\mu} \cdot 15$ [kHz] | Y [symbol] |
|---|---|---|
| 0 | 15 | 1 |
| 1 | 30 | 1 |
| 2 | 60 | 1 |
| 3 | 120 | 2 |

In Table 20, μ denotes a numerology, △f indicates a subcarrier spacing, and Y indicates the number of symbols in a guard period, that is, the length of the guard period. Referring to Table 20, the guard period may be configured based on the parameter μ determining numerology. The UE is configured not to transmit any signals in the guard period, and the guard period may be configured to be solely used for antenna switching. For example, the guard period may be configured considering SRS resources transmitted on the same slot. In particular, if a UE is configured and/or indicated to transmit an aperiodic SRS configured through intra-slot antenna switching, the UE may transmit the SRS by using different transmission antennas per designated SRS resource, and a guard period described above may be configured between the resources.

In addition, if an SRS resource and/or an SRS resource set configured for an antenna switching usage is configured for a UE through higher layer signaling as described above, the UE may be configured to perform SRS transmission, based on a UE capability related to antenna switching. The UE may report, to the base station, capability information indicating whether the UE supports SRS antenna switching. The capability information may include a parameter representing an SRS transmission port switching pattern supported by the UE. The capability of the UE related to antenna switching, reported by the parameter, may be "1T2R", "2T4R", "1T4R", "1T4R/2T4R", "1T1R", "2T2R", "4T4R", etc. The "xTyR" may mean a UE capability indicating that SRS transmission is possible on x antenna ports over a total of y reception antennas.

For example, in a case of a UE supporting 1T2R, up to two SRS resource sets may be configured to have different values for resourceType of the higher layer parameter SRS-ResourceSet. Here, each SRS resource set may have two SRS resources transmitted on different symbols, and each SRS resource may configure a single SRS port in the given SRS resource set. In addition, an SRS port for a second SRS resource in an SRS resource set may be configured to be associated with a UE antenna port different from that of an SRS port for a first SRS resource in the same SRS resource set.

As another example, in a case of a UE supporting 2T4R, up to two SRS resource sets may be configured to have different values for resourceType of the higher layer parameter SRS-ResourceSet. Here, each SRS resource set may have two SRS resources transmitted on different symbols, and each SRS resource may configure two SRS ports in the given SRS resource set. In addition, an SRS port pair for a second SRS resource in an SRS resource set may be configured to be associated with a UE antenna port different from that of an SRS port pair for a first SRS resource in the same resource set.

As another example, in a case of a UE supporting 1T4R, SRS resource sets may be configured in different methods according to whether SRS transmission is configured to be periodic, semi-persistent, and/or aperiodic. First, if SRS transmission is configured to be periodic or semi-persistent, zero or one SRS resource set configured based on resourceType of the higher layer parameter SRS-ResourceSet may be configured by four SRS resource sets transmitted on different symbols. Here, each SRS resource may configure a single SRS port in the given SRS resource set. SRS ports for respective SRS resources may be configured to be associated with different UE antenna ports. Unlike the above case, if SRS transmission is configured to be aperiodic, zero or two SRS resource sets configured based on resourceType of the higher layer parameter SRS-ResourceSet may be configured by a total of four SRS resource sets transmitted on different symbols of two different slots. SRS ports for respective SRS resources in the given two SRS resource sets may be configured to be associated with different UE antenna ports. Each SRS resource set may be configured by two SRS resources, or one SRS resource set may be configured by one SRS resource and the remaining SRS resource set may be configured by three SRS resources.

As another example, in a case of a UE supporting 1T1R, 2T2R, or 4T4R, up to two SRS resource sets each configured by one SRS resource may be configured for SRS resource. The number of SRS ports of each SRS resource may be configured to be 1, 2, or 4.

If an indicated UE capability is 1T4R/2T4R, a corresponding UE may expect that the same number (e.g., 1 or 2) of SRS ports is to be configured for all SRS resources in an SRS resource set(s). In addition, if an indicated UE capability is 1T2R, 2T4R, 1T4R, or 1T4R/2T4R, a corresponding UE may not expect that one or more SRS resource sets configured for an antenna switching usage are to be configured or triggered on the same slot. In addition, even if an indicated UE capability is 1T1R, 2T2R, or 4T4R, a corresponding UE may not expect that one or more SRS resource sets configured for an antenna switching usage are to be configured or triggered on the same slot.

Various embodiments described above have been given without an explicit configuration for a UE related to a panel for at least uplink and downlink transmission. That is, a UE antenna port for SRS antenna switching may be configured without explicit consideration of a panel of a UE, and a base station and the UE may operate according thereto. If at least two panels being explicitly configured is considered, an SRS resource set(s) having an antenna switching usage may be configured for each panel. In this case, a UE capability may exist according to whether the UE is able to simultaneously transmit the SRS resource set(s) configured for each panel, whether the UE is able to configure same on the same slot, or whether the UE is able to transmit same on the same slot.

Referring to the above descriptions related to SRS resource (set)-related configurations and SRS antenna port configurations, an operation of a base station and a UE considering a maximum of four antenna ports has been proposed. Specifically, an operation of configuring an SRS resource or an SRS resource set in RRC configuration of a base station and a UE may be configured using a parameter (e.g., srs-ResourceID, nrofSRS-Ports, transmissionComb, combOffset, cyclicshift, resourceMapping, startPostition, nrofSymbols, repetitionFator, freqDomainPosition, FreqDomainShfit, freq-Hopping, groupOrSequenceHopping, resourceType, sequenceID, spatialRelationInfo, etc.) according to the number of antenna ports.

In such a design method, electronic devices (e.g., customer-premises equipment (CPE), fixed wireless access (FWA), vehicles, or industrial devices) supporting more than four antenna ports are not considered at all. In addition, in an SRS antenna port switching operation considered for a maximum of four antenna ports, the number of antenna ports required for downlink transmission is limited, or performance for downlink channel estimation is limited.

Therefore, in order to overcome this deterioration, more than four uplink transmission (Tx) antenna ports are being discussed in Rel-18. In particular, a method of configuring an SRS resource and/or an SRS resource set by a base station is required for an electronic device supporting 8Tx/6Tx. Therefore, a method for SRS resource configuration and/or SRS resource set configuration for supporting more than four uplink transmission (Tx) antenna ports is proposed through embodiments of the disclosure. In addition, various embodiments of the disclosure propose a parameter required to be added or expanded in an SRS resource configuration process of a base station. In addition, a 8Tx/6Tx-based SRS transmission method, suitable for supported various subcarrier spacings (SCSs), considering multiple SRS ports in a frequency band of 6GHz or higher is proposed.

Hereinafter, an operation of a base station and an electronic device for supporting multiple SRS ports is described in detail by concretely explaining various embodiments.

In the disclosure, a base station is an entity that allocates resources to electronic devices, and may be at least one of a gNode B, a gNB, an eNode B, a Node B, a base station (BS), a wireless access unit, a base station controller, and a node on a network. An electronic device may include a user equipment (UE), a mobile station (MS), a cellular phone, a smartphone, a computer, or a multimedia system, a CPE, an FWA, a vehicle, an industrial equipment, etc. capable of performing communication functions. The electronic device may support Tx antenna ports the number of which exceeds 4.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

<First embodiment: SRS resource set, and SRS resource(s) per SRS resource set>

The first embodiment of the disclosure proposes the number of SRS resource sets and the number of SRS resources per SRS resource set which are configurable by a base station for an electronic device according to an antenna switching capability of the electronic device.

Table 21 shows an example of representing the number of SRS resource sets and the number of SRS resources per SRS resource set which are configurable according to an antenna switching capability of an electronic device. In Table 21, "xTyR" may indicate x transmission (Tx) antenna ports and y reception (Rx) antenna ports supported by the electronic device. In Table 21, two or more values may imply that the electronic device and the base station are able to support multiple configuration values.

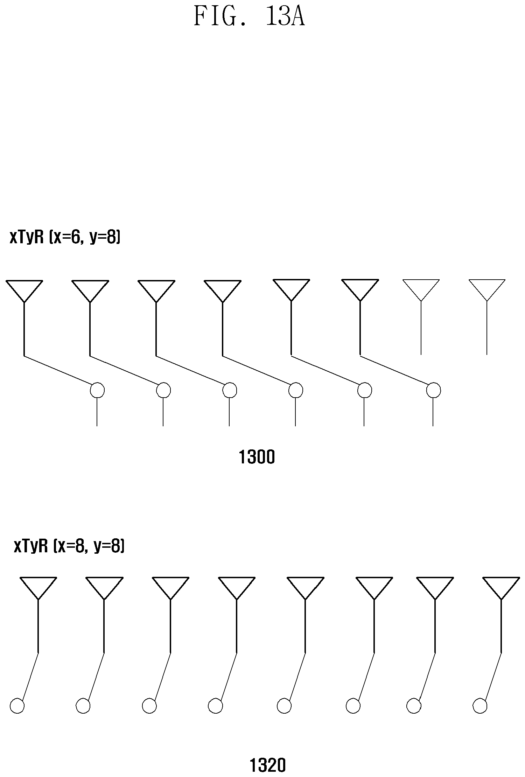

FIG. 13A illustrates an example of Tx/Rx antenna port mapping for SRS antenna switching according to an embodiment of the disclosure. Reference numeral 1300 of FIG. 13A indicates an example where xTyR is configured to be 6T8R, and reference numeral 1320 indicates an example where xTyR is configured to be 8T8R.

As shown in the examples 1300 and 1320 of FIG. 13A, for an electronic device supporting x Tx antenna ports (e.g., chains or modules) associated with (coupled to) y Rx antenna ports, a base station may determine and configure, as the number of SRS resource sets, a natural number value (e.g., ceil(y/x)) obtained by rounding up the value of y/x, or a value(s) equal to or smaller than the value. If the number of SRS resource sets is determined, the base station may determine and configure up to a number equal to or smaller than y as the number of SRS resources.

For example, in a case where the electronic device supports antenna switching of 6T8R as shown in the example 1300 of FIG. 13A, one or two SRS resource sets, the number of which is equal to or smaller than a value obtained by rounding up 8/6, may be configured. In addition, if the number of SRS resource sets is determined, the number of SRS resources may also be determined. For example, if two SRS resource sets are configured for the electronic device supporting antenna switching of 6T8R, two or three SRS resources may be configured to perform sounding of eight Rx antennas. In particular, three SRS resources being configured may be suitable for performing sounding two times in each antenna.

In addition, variable shown in Table 21 may imply that no particular value is designated, or a random particular value is designated and then may be changed to another value in a dynamic form. For example, if the number of SRS resources per SRS resource set is variable for an electronic device supporting 8T8R, the number of SRS resources per SRS resource set may be configured to be 1 or 2, if the number is configured to be 1, the number may be changed to 2 by an RRC configuration, a MAC CE, or DCI, and if the number is configured to be 2, the number may be changed to 1 by an RRC configuration, a MAC CE, or DCI.

Table 21 below shows a simple representation of possible combinations, and detailed description of each case will be given later.

[Table 21]

| Antenna switching capability | # SRS Resources Per SRS resource Set | # SRS Resource Set |
|---|---|---|
| 4T6R | 1 | 2 or 3 |
| | 2 or 3<br>Variable | 1<br>1, 2, or 3 |
| 6T6R | 1<br>1 or 2<br>Variable | 2<br>1<br>1 or 2 |
| 6T8R | 1<br>1 or 2<br>Variable | 2 or 3<br>1<br>1, 2, or 3 |
| 8T8R | 1<br>1 or 2<br>Variable | **2**<br>**1**<br>**1 or 2** |
| 6T24R | 1<br>2<br>4<br>Variable | 4<br>2<br>1<br>1, 2, or 4 |
| 8T24R | 1<br>3<br>Variable | 3<br>1<br>1, 2, or 3 |

In this embodiment, cases from the first row to the fourth row of Table 21 are first described, and particular embodiments will be described later in detail.

An electronic device may transmit a UE capability message to a base station in a process of RRC configuration, reconfiguration, and connection with the base station. The UE capability message may include information indicating an SRS antenna switching capability supportable by the electronic device. For example, the UE capability message may include information corresponding to 4T6R, 6T6R, 6T8R, and/or 8T8R in Table 21, or corresponding information. In addition, the UE capability message may include information corresponding to 6T24R, 8T24R, 8T12R, etc., or corresponding information. In addition, for example, the UE capability message may include information related to a method of transmitting an SRS in the time domain by the electronic device. For example, the UE capability message may include information corresponding to periodic, semi-persistent, or aperiodic as an SRS transmission method in the time domain supportable by the electronic device, or corresponding information.

Hereinafter, an operation according to SRS-related configuration of a base station and the capability of an electronic device after the electronic device transmits a UE capability message is described.

<(1-1)th embodiment: In case of xTyR and x=y or 4<y, SRS resource (set)-related configuration>

For an electronic device supporting x Tx antenna ports (e.g., chains or modules) associated with (coupled to) y Rx antenna ports, a base station may determine and configure a natural number value (e.g., ceil(y/x)) obtained by rounding up the value of y/x as a maximum number of SRS resource sets or a maximum number of SRS resources per SRS resource set. The base station may minimize the number of SRS resource sets or the number of SRS resources per SRS resource set by considering the efficiency of resources allocated for an SRS and the ease of implementation. In addition, if one of the number of SRS resource sets or the number of SRS resources per SRS resource set is determined, the base station may determine and configure up to a number equal to or smaller than Y as the number of SRS resources per SRS resource set or the number of SRS resource sets, which has not been determined. The number of SRS resource(s) may be determined based on comb offset (combOffset) and cyclic shift (Cyclicshift) values described in detail hereinafter. The base station may determine minimum SRS resources (e.g., RBs in one OFDM symbol) to be used, by configuring large values as combOffset and Cyclicshift values to maximize the efficiency of resources allocated for an SRS.

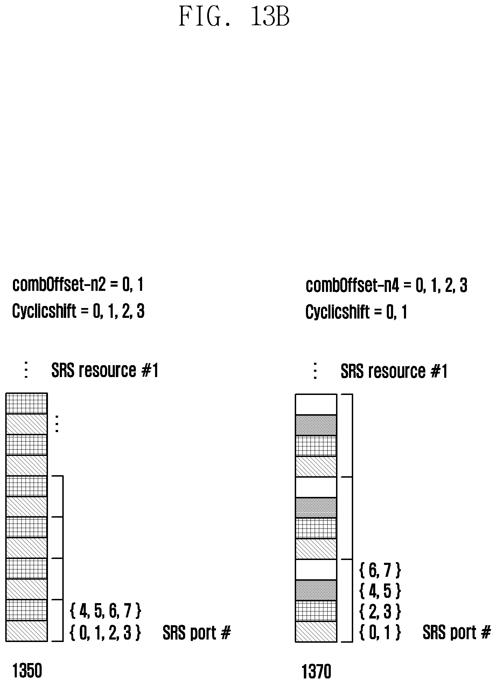

FIG. 13B is an example for illustrating antenna ports configured for an SRS resource according to an embodiment of the disclosure.

Specifically, reference numeral 1350 of FIG. 13B indicates an example where comboffset corresponding to SRS resource #1 is configured to be {0,1} and cyclicshift is configured to be {0,1,2,3}. Reference numeral 1370 of FIG. 13B indicates an example where comboffset corresponding to SRS resource #1 is configured to be {0,1,2,3} and cyclicshift is configured to be {0,1}.

For example, in a case where the electronic device supports antenna switching of 8T8R as shown in the example 1320 of FIG. 13A, the base station may configure up to one SRS resource, the number of which is a value obtained by rounding up 8/8, for each SRS resource set. In addition, the base station may configure one SRS resource set to minimize allocated resources for SRS transmission. That is, based on the values of combOffset and Cyclicshift corresponding to one SRS resource identifier (SRS-resourceID), if the product (i.e., (combOffset value +1) x (Cyclicshift value +1)) of (combOffset value +1) and (Cyclicshift value +1) is 8, a case where configuration of 8Tx is possible at once corresponds thereto. As a specific example, in the example 1350 of FIG. 13B, comboffset is {0,1} and cyclicshift is {0,1,2,3} and thus the product of (1+1) and (3+1) is 8, and therefore, this case may correspond to a case where configuration of 8Tx is possible at once. As another example, in a case where the electronic device supports antenna switching of 8T8R, the base station may configure up to one SRS resource set, the number of which is a value obtained by rounding up 8/8. In addition, the base station may configure one SRS resource per SRS resource set to minimize allocated resources for SRS transmission. That is, based on the values configured as combOffset and Cyclicshift corresponding to one SRS resource identifier (SRS-resourceID), if (combOffset value +1) x (Cyclicshift value +1) is 8, a case where configuration of 8Tx is possible at once corresponds thereto.

As another example, in a case where the electronic device supports antenna switching of 8T8R, the base station may configure up to one SRS resource, the number of which is a value obtained by rounding up 8/8, for each SRS resource set. In addition, the base station may distinguishably configure two SRS resource sets for improvement of SRS performance while minimizing allocated resources for SRS transmission. That is, based on the values (the examples 1350 and 1370 in FIG. 13B) configured as combOffset and Cyclicshift corresponding to one SRS resource identifier (SRS-resourceID), if (combOffset value +1) x (Cyclicshift value +1) is 8, a case where configuration of 8Tx is possible at once corresponds thereto. Alternatively, in a case where the electronic device supports antenna switching of 8T8R, the base station may configure up to one SRS resource set, the number of which is a value obtained by rounding up 8/8. In addition, the base station may repeatedly configure two SRS resources per SRS resource set for improvement of SRS performance while minimizing allocated resources for SRS transmission. That is, based on the values configured as combOffset and Cyclicshift corresponding to one SRS resource identifier (SRS-resourceID), if (combOffset value +1) x (Cyclicshift value +1) is 8, a case where configuration of 8Tx is possible at once corresponds thereto.

As another example, in a case where the electronic device supports antenna switching of 8T8R, the base station may configure up to one SRS resource set, the number of which is a value obtained by rounding up 8/8. In addition, the base station may configure two SRS resources per SRS resource set to minimize allocated resources for SRS transmission. That is, (combOffset value +1) x (Cyclicshift value +1) is 4, based on the values configured as combOffset and Cyclicshift corresponding to one SRS resource identifier (SRS-resourceID), and the SRS-resourceID is configured twice, and thus a case where configuration of 8Tx is possible over two times corresponds thereto.

When the base station determines the number of SRS resource sets or the number of SRS resources per SRS resource set, for an electronic device supporting x Tx antenna ports (e.g., chains or modules) associated with (coupled to) y Rx antenna ports, the number of SRS resource sets may be differently configured according to the resource type (resourceType) of a configured SRS in the time domain. For example, the number of SRS resource sets when the resource type configured for the electronic device corresponds to a semi-persistent SRS or an aperiodic SRS may be equal to or greater than the number of SRS resource sets when the resource type corresponds to a periodic SRS. As another example, the number of SRS resource sets when the resource type configured for the electronic device corresponds to an aperiodic SRS may be equal to or greater than the number of SRS resource sets when the resource type corresponds to a semi-persistent SRS.

In addition, when the number of SRS resource sets or the number of SRS resources per SRS resource set is determined, for an electronic device supporting x Tx antenna ports (e.g., chains or modules) associated with (coupled to) y Rx antenna ports, a base station may determine and configure up to two times of a natural number value (e.g., ceil(y/x)) obtained by rounding up y/x as the number of SRS resource sets or the number of SRS resources per SRS resource set. This is because the base station needs to manage numerous RRC-connected UEs in a single cell and if an SRS resource set for one semi-persistent SRS is connected for a particular electronic device, the electronic device may collide with the other many UEs on some resources. In order to solve this problem, the base station may determine and configure, as the number of SRS resource sets for the electronic device, two times of a natural number value (e.g., ceil(y/x)) obtained by rounding up y/x, which is greater than at least the natural number value (e.g., ceil(y/x)) obtained by rounding up y/x. That is, the base station may configure a sufficient number of SRS resource sets in an RRC configuration process and indicate to activate or deactivate same by using a MAC CE, so that the increment of the number of SRS resource sets enables avoiding collision between UEs caused by SRS transmission.

If the number of SRS resource sets is determined, a base station may determine up to a number equal to or smaller than y as the number of SRS resources, and configure same for an electronic device. The number of SRS resources may be determined based on combOffset and Cyclicshift values described in detail hereinafter. The base station may determine minimum SRS resources (e.g., RBs in one OFDM symbol) to be used, by configuring large values as combOffset and Cyclicshift values to maximize the efficiency of resources allocated for an SRS.

For example, in a case where the electronic device supports antenna switching of 8T8R, the base station may configure up to two SRS resource sets, the number of which is two times of a value obtained by rounding up 8/8. In addition, the base station may configure one SRS resource to minimize allocated resources for SRS transmission.

As another example, in a case where the electronic device supports antenna switching of 8T8R, the base station may configure up to two SRS resource sets, the number of which is two times of a value obtained by rounding up 8/8. However, configuration of two SRS resource sets may reduce a probability of SRS collision of the UE, and thus it may be preferred to configure 1 as the number of SRS resources per SRS resource set.

As another example, in a case where the electronic device supports antenna switching of 8T8R and a supported resource type corresponds to an aperiodic or semi-persistent SRS, the base station may configure up to two SRS resource sets, the number of which is two times of a value obtained by rounding up 8/8. In addition, the base station may configure one SRS resource to minimize allocated resources for SRS transmission. On the other hand, in a case where the electronic device supports antenna switching of 8T8R and a supported resource type corresponds to a periodic SRS, the base station may configure up to one SRS resource set, the number of which is a value obtained by rounding up 8/8. In addition, the base station may configure one SRS resource to minimize allocated resources for SRS transmission.

After receiving a UE capability message described above, the base station may configure relevant parameters by using SRS resource configuration information (e.g., SRS-Resource) and SRS resource set configuration information (e.g., SRS-ResourceSet) in an RRC configuration operation for SRS transmission of the UE.

For example, if the electronic device supports 8TyR, the base station may configure one SRS resource identifier (SRS-ResourceId), and configure one SRS resource set identifier (SRS-ResourceSetId). In this case, for SRS transmission on eight ports as shown in the example 1350 of FIG. 13B, the base station may configure one value (e.g., 0 or 1) among {0, 1} as the SRS-related configuration parameter combOffset-n2, and configure one value (e.g., 0 to 3) among {0, 1, 2,... ,7} as Cyclicshift. As another example, for SRS transmission on eight ports as shown in the example 1370 of FIG. 13B, the base station may configure one value among {0, 1, 2, 3} as the SRS-related configuration parameter combOffset-n4, and configure one value (e.g., 0 or 1) among {0, 1, 2, ... , 11} as Cyclicshift. The base station may configure different values of combOffset-n2 or combOffset-n4, and Cyclicshift to distinguish between eight SRS signals transmitted by the UE according to the change of combOffset and cyclicShift. The examples 1350 and 1370 of FIG. 13B show the indexes and the number of SRS ports mapped to a resource having a configured SRS resourceId of 1 (e.g., SRS resource #1).

After transmitting a UE capability message described above, the electronic may map an antenna port index to an SRS transmission port index corresponding to an SRS resource configured by the base station. The electronic device may receive SRS resource (set)-related RRC configuration information, based on information included in the transmitted UE capability message. The UE may expect a maximum number of SRS resources (SRS resource sets) and the configuration position of the resources which are configured by the base station, according to the reported UE capability. Based on an RRC configuration including SRS-Resource and SRS-ResourceSet described above, the electronic device may consider antenna mapping and switching for SRS transmission. For example, as shown in Table 22, antenna port index 0 of the UE may be mapped to the lowest SRS port index for SRS transmission on an SRS resource configured by the base station. The UE may sequentially map antenna port indexes to SRS port indexes on the resource configured by the base station so that at least one of the antenna port indexes does not overlap. Specifically, if the electronic device supports **8T8R,** the electronic device may map SRS port #0 of a first SRS resource to UE antenna port 0, map SRS port #1 of the first SRS resource to UE antenna port 1, ... , and map SRS port #7 of the first SRS resource to UE antenna port 7. In particular, the electronic device may map UE antenna port 0 identically to UE antenna port 0 used during an Rx operation of receiving a downlink reference signal (e.g., SS/PBCH block(s) pr CSI-RS) of the base station. UE antenna port 0 merely corresponds to an embodiment, and may be mapped without overlapping.

[Table 22]

| SRS ports | UE Antenna ports |
|---|---|
| SRS port 0 of the 1st SRS resource | UE antenna port 0 |
| SRS port 1 of the 1st SRS resource | UE antenna port 1 |
| SRS port 2 of the 1st SRS resource | UE antenna port 2 |
| SRS port 3 of the 1st SRS resource | UE antenna port 3 |

(continued)

| SRS ports | UE Antenna ports |
|---|---|
| SRS port 4 of the 1st SRS resource | UE antenna port 4 |
| SRS port 5 of the 1st SRS resource | UE antenna port 5 |
| SRS port 6 of the 1st SRS resource | UE antenna port 6 |
| SRS port 7 of the 1st SRS resource | UE antenna port 7 |

<(1-2)th embodiment: In case of xTyR, 4<x<y, SRS resource (set)-related configuration>

For an electronic device supporting x Tx antenna ports (e.g., chains or modules) associated with (coupled to) y Rx antenna ports, a base station may determine and configure a natural number value (e.g., ceil(y/x)) obtained by rounding up the value of y/x as a maximum number of SRS resource sets or the number of SRS resources per SRS resource set. The base station may minimize the number of SRS resource sets or the number of SRS resources per SRS resource set by considering the efficiency of resources allocated for an SRS and the ease of implementation. In addition, if at least one of the number of SRS resource sets or the number of SRS resources per SRS resource set is determined, the base station may determine and configure up to a number equal to or smaller than Y as the number of SRS resources or SRS resource sets, which has not been determined. The number of SRS resources per SRS resource set may be determined based on combOffset and Cyclicshift values described in detail hereinafter. The base station may determine minimum SRS resources (e.g., RBs in one OFDM symbol) to be used, by configuring large values as combOffset and Cyclicshift values to maximize the efficiency of resources allocated for an SRS.

Table 23 shows an example in which the number of SRS resources and the number of SRS resource sets are determined, based on a UE capability and the resource type of an SRS according to an embodiment of the disclosure.

For example, in a case where the electronic device supports antenna switching of 8T12R as shown in Table 23, the base station may configure up to two SRS resources, the number of which is a value obtained by rounding up 12/8, for each SRS resource set. In addition, the base station may configure one SRS resource set to minimize allocated resources for SRS transmission. If (combOffset value +1) x (Cyclicshift value +1) is 8, based on the values configured as combOffset and Cyclicshift corresponding to one SRS resource identifier (SRS-resourceID), 8Tx may be configured at once, and if the product of (combOffset value +1) and (Cyclicshift value +1) is 8, based on the values configured as combOffset and Cyclicshift corresponding to the remaining SRS resource identifier (SRS-resourceID), 8Tx may be configured at once.

As another example, in a case where the electronic device supports antenna switching of 8T12R, the base station may configure up to two SRS resources, the number of which is a value obtained by rounding up 12/8, for each SRS resource set. In addition, the base station may distinguishably configure two SRS resource sets for improvement of SRS performance while minimizing allocated resources for SRS transmission. That is, based on the values (the examples 1350 and 1370 in FIG. 13B) configured as combOffset and Cyclicshift corresponding to one SRS resource identifier (SRS-resourceID), if the product of (combOffset value +1) and (Cyclicshift value +1) is 8, a case where configuration of 8Tx is possible at once corresponds thereto.

When the base station determines the number of SRS resource sets or the number of SRS resources per SRS resource set, for an electronic device supporting x Tx antenna ports (e.g., chains or modules) associated with (coupled to) y Rx antenna ports, the number of SRS resource sets may be differently configured according to the resource type (resourceType) of a configured SRS in the time domain. For example, the number of SRS resource sets when the resource type configured for the electronic device corresponds to a semi-persistent or aperiodic SRS may be equal to or greater than the number of SRS resource sets when the resource type corresponds to a periodic SRS. As another example, the number of SRS resource sets when the resource type configured for the electronic device corresponds to an aperiodic SRS may be equal to or greater than the number of SRS resource sets when the resource type corresponds to a semi-persistent SRS.

In addition, when the number of SRS resource sets or the number of SRS resources per SRS resource set is determined, for an electronic device supporting x Tx antenna ports (e.g., chains or modules) associated with (coupled to) y Rx antenna ports, a base station may determine and configure up to a natural number value (e.g., ceil(y/x)) obtained by rounding up y/x as the number of SRS resources per SRS resource set. This is because the base station needs to manage numerous RRC-connected UEs in a single cell and if an SRS resource set for one semi-persistent SRS is connected for a particular electronic device, the electronic device may collide with the other UEs on some resources. In order to solve this problem, the base station may determine and configure, as the number of SRS resource sets for the UE, at least a natural number value (e.g., ceil(y/x)) obtained by rounding up y/x. That is, the base station may configure a sufficient number of SRS resource sets in an RRC configuration process and indicate to activate or deactivate same by using a MAC CE, so that the increment of the number of SRS resource sets enables avoiding collision between UEs caused by SRS transmission. In addition, when the number of SRS resource sets is determined, the base station may configure up to SRS resources, the number of which is equal to or smaller than y (e.g., equal to or smaller than ceil(y/x)) for each SRS resource set. Specifically, the number of SRS resources per SRS resource set may be determined based on combOffset and Cyclicshift values described in detail hereinafter. The base station may determine minimum SRS resources (e.g., RBs in one OFDM symbol) to be used, by configuring large values as combOffset and Cyclicshift values to maximize the efficiency of resources allocated for an SRS.

As shown in Table 23, the base station and the electronic device may need to perform an operation of identifying the capability of the electronic device according to an SRS resource type (resourceType). In Table 23, if the electronic device has a support capability of 8T12R, the number of SRS resources may be different according to whether the electronic device reports a semi-persistent SRS support capability to the base station. For example, if semi-persistent SRS support is reported as capability information of the electronic device, the base station may configure 2 as a maximum number of SRS resource sets. On the contrary, if semi-persistent SRS support is not reported as capability information of the electronic device, the base station may configure 1 as a maximum number of SRS resource sets. In this case, a maximum number of SRS resources per SRS resource set may be identical as 2. When an aperiodic SRS is configured, the base station may perform an operation of identifying whether the capability of the electronic device supports an aperiodic SRS, but the base station may freely configure up to 2 as the number of SRS resources per SRS resource set regardless of the capability. There may be no limitation to improve the flexibility of aperiodic SRS resource configuration.

The above description is given mainly with reference to Table 23, but may be sufficiently expanded and configured as shown in Table 24. In addition, same may also be applied to an antenna switching pattern such as 8T8R, 6T8R, etc.

[Table 23]

| Antenna switching capability | Time domain behavior | # SRS Resources Per Set | # SRS Resource Set | Note |
|---|---|---|---|---|
| 8T12R | Periodic | 2 | 1 | Regardless of the UE capability |
| | semi-persistent | 2 | 1 | UE capability is not reported |
| 8T16R | semi-persistent | 2 | 2 | UE capability is reported |
| | periodic | 2 | 1 | |
| | aperiodic | 2 | 1 | Regardless of the UE capability |

Table 24 shows another example in which the number of SRS resources and the number of SRS resource sets are determined, based on whether a UE capability and an SRS resource type capability are reported, according to an embodiment of the disclosure.

Table 24]

| Antenna switching capability | Time domain behavior | # SRS Resources Per Set | # SRS Resource Set | Note |
|---|---|---|---|---|
| 8T20R | periodic | 3 | 1 | Regardless of the UE capability |
| | semi-persistent | 3 | 1 | UE capability is not reported |
| | semi-persistent | 3 | 2 | UE capability is reported |
| | periodic | 3 | 1 | |
| 8T24R | aperiodic | 3 | 1 | Regardless of the UE capability |
| | | 2 (for 1 set), 1 (for 1 set) | 2 | |
| | | 1 | 3 | |

<(1-3)th embodiment: RRC parameter modification and expansion>

Additional RRC parameters for supporting at least 8T8R, 8T12R, etc. in an SRS resource configuration (e.g., **SRS-Resource**) described above are proposed.

Table 25 shows an example of configuration information (e.g., SRS-Resource) for configuring an SRS resource. Referring to FIG. 25, the configuration information (e.g., SRS-Resource) may include an SRS resource identifier (srs-ResourceId), a parameter (nrofSRS-Ports) indicating the number of SRS ports, a parameter (transmissionComb) indicating a comb value and a comb offset, and a parameter (resourceMapping) indicating an OFDM symbol position of an SRS resource in a slot.

The parameter nrofSRS-Ports indicating the number of SRS ports may include the number (e.g., ports x) of Tx for xTyR. For example, the base station may configure "ports 8" for the electronic device having a capability of supporting 8T8R or 8T12R in a UE capability report.

Referring to Table 25, the parameter resourceMapping-r18 indicating an OFDM symbol position of an SRS resource proposed in the disclosure is described in detail. The parameter may include a parameter (nrofSymbols) indicating the number of consecutive OFDM symbols, a parameter (repetitionFactor) related to repetition, and a parameter (startPosition) indicating a starting symbol position of the SRS resource.

As shown in Table 25, the base station may configure the value of 0 to 13 as startPosition of resourceMapping-r18 in an SRS resource configuration. The SRS start position $l_0$ in the time domain may be calculated based on the last symbol of a slot, and may be determined by $l_0 = N_{symb}^{slot} - 1 - l_{offset}$ . $l_{offset}$ satisfies $l_{offset} \in \{0,1, ... ,13\}$, and may be configured by startPosition. This is because transmission of the SRS is required to be possible on the first symbol in a particular slot.

In addition, a value configurable as nrofSymbols indicating the number of consecutive SRS symbols transmitted starting from an SRS start position in one slot may be modified. Symbols corresponding to nrofSymbols may also cross over a single slot, and thus may be configured to have a sufficiently large value according to an SCS value. Eventually, the base station may configure a large value, such as n8 or n12, as nrofSymbols of an SRS resource configuration.

In addition, the base station may configure n8 as a repetition-related parameter (repetitionFactor) to support 8TyR in an SRS resource configuration. The reason is that 8 repetitive transmissions corresponding to a number corresponding to minimum 8T is required to be supported to perform sequential transmission by switching 8 antennas based on beamforming of the electronic device for DL CSI improvement.

In addition, referring to Table 25, a parameter (transmissionComb) indicating a comb value and a comb offset of an SRS resource proposed in the disclosure is described in detail. TransmissionComb may include comboffset and cyclicshift corresponding to the number of ports. The base station may configure one value of 0 to 7 as a comboffset value and configure one value of 0 to 5 as cyclicshift to configure n8 as transmissionComb to support 8TyR in an SRS resource configuration. The reason is that interference may increase when multiple UEs support 8 SRS ports in one cell by adjusting the values of comboffset and cyclicshift as expansion of a method of transmitting several ports at once at the time of SRS transmission.

In the above description, an embodiment for a higher layer configuration for an electronic device supporting 8TyR is mainly described, but the range of various embodiments of the disclosure is not limited thereto. Therefore, the above description may also be applied to a different number of times of Tx such as 6TyR or 10TyR.

[Table 25]

```
SRS-Resource  ::=                   SEQUENCE {
    srs-ResourceId                      SRS-ResourceId,
    nrofSRS-Ports                       ENUMERATED {port1, ports2,
ports4, ports8},
    ptrs-PortIndex                      ENUMERATED {n0, n1 }
OPTIONAL,    -- Need R
    transmissionComb                    CHOICE {
        n2                                  SEQUENCE {
            combOffset-n2                   INTEGER (0..1),
            cyclicShift-n2                  INTEGER (0..7)
        },
        n4                                  SEQUENCE {
            combOffset-n4                   INTEGER (0..3),
            cyclicShift-n4                  INTEGER (0..11)
        n8
            combOffset-n8                   INTEGER (0..7),
            cyclicShift-n8                  INTEGER (0..5)
        }
    resourceMapping-r18                     SEQUENCE {
        startPosition                       INTEGER (0..13),
        nrofSymbols                         ENUMERATED {n1, n2,
n4, n8, n12},
        repetitionFactor                    ENUMERATED {n1, n2,
n4, n8}
    }
...
```

<Second embodiment: SRS configuration and operation considering a minimum guard period at a higher SCS>

The second embodiment proposes additional contents required to be considered in an SRS configuration when a frequency band in which beamforming is performed in uplink is 6 GHz or higher (e.g., a 28 GHz band, a 39-40 GHz band, or a band of 60 GHz or higher). In particular, when a subcarrier spacing is 480 or 960, an SRS resource configuration and a corresponding operation will be described.

Table 26 shows an example of a minimum guard period (e.g., Y symbol(s)) according to the size of a subcarrier spacing (SCS) required to be considered at the time of SRS transmission when an uplink frequency band supported by an electronic device is 6 GHz or higher (e.g., a 28 GHz band, a 39-40 GHz band, or a band of 60 GHz or higher).

For example, SCSs of 480 kHz and 960 kHz may be considered for beamforming of the electronic device in an ultra-high frequency band of 60 GHz or higher, that is, a frequency range (FR) 2-2 band. The base station and the electronic device may determine a minimum guard period of 480 kHz and 960 kHz bands through scaling based on the size of a minimum guard period defined in a 120 kHz band, so as to support bands of 480 kHz and 960 kHz in uplink. Specifically, the values of Table 26 being supported may be determined.

[Table 26]

| $\mu$ | $\Delta f = 2^{\mu} \cdot 15$ [kHz] | Y [symbol] |
|---|---|---|
| 0 | 15 | 1 |
| 1 | 30 | 1 |
| 2 | 60 | 1 |
| 3 | 120 | 2 |
| 4 | 240 | - |
| 5 | 480 | A |

(continued)

| $\mu$ | $\Delta f = 2^{\mu} \cdot 15$ [kHz] | Y [symbol] |
|---|---|---|
| 6 | 960 | B |

Alt 1: A = 8 and B = 16 may be defined using a linear scaling method. That is, with respect to Y=2 symbols corresponding to the size of a minimum guard period of 120 kHz, A = 8 and B = 16 may be determined by multiplying the value by 4 at 480 kHz, and by multiplying the value by 8 at 960 kHz.

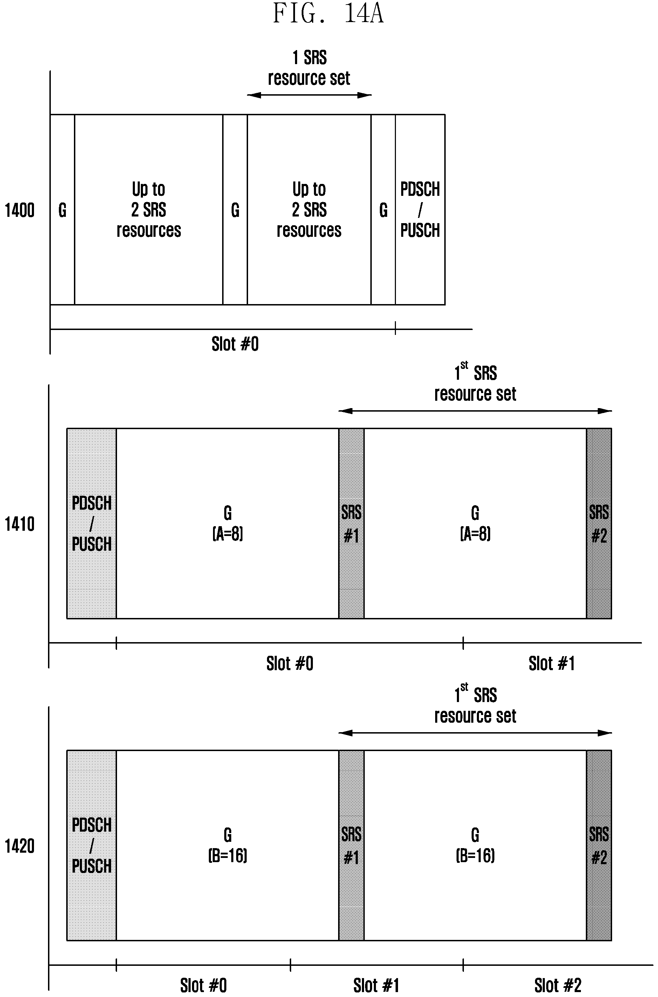

FIG. 14A is a diagram illustrating a method of configuring a minimum guard period, an SRS resource, and an SRS resource set for an extended SCS according to an embodiment of the disclosure.

Reference numeral 1410 of FIG. 14A indicates an example in which A is equal to 8, that is, a minimum guard period is configured to be 8 symbols, and reference numeral 1420 indicates an example in which B is equal to 16, that is, a minimum guard period is configured to be 16 symbols. In the examples 1410 and 1420 of FIG. 14A, if A is determined to be 8 and B is determined to be 16, in order to follow a previous standard (rel-16) defined so that an SRS resource set is valid in one slot, the base station may configure an SRS resource set to include only one SRS resource. This is because, as shown in the examples 1410 and 1420, the base station and the UE require a minimum guard period as long as minimum 8 symbols or 16 symbols to perform antenna switching, and if the number of SRS resources per SRS resource set is 2 or greater, it is impossible to follow the assumption of the previous standard.

Alt 2: The values of A and B may be defined using a slightly smaller value compared to linear scaling. That is, with respect to Y=2 symbols corresponding to the size of a minimum guard period at 120 kHz, A may be defined to be, at 480 kHz, a value smaller than 8 that is 4 times of the above value, and B may be defined to be, at 960 kHz, a value smaller than 16 that is 8 times of the above value. For example, A = 4 and B = 6 may be defined.

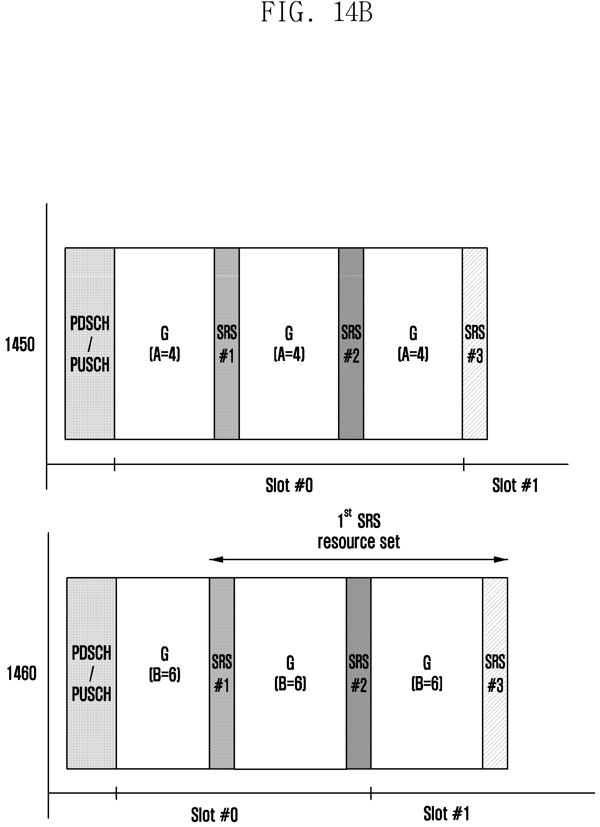

FIG. 14B is another diagram illustrating a method of configuring a minimum guard period, an SRS resource, and an SRS resource set for an extended SCS according to an embodiment of the disclosure.

Reference numeral 1450 of FIG. 14B indicates an example in which A is equal to 4, that is, a minimum guard period is configured to be 4 symbols, and reference numeral 1450 indicates an example in which B is equal to 6, that is, a minimum guard period is configured to be 6 symbols. In the examples 1450 and 1460 of FIG. 14B, for example, if A is determined to be 4 and B is determined to be 6, in order to follow a previous standard (rel-16) defined so that an SRS resource set is valid in one slot, the base station may properly adjust and configure the number of SRS resources for the electronic device. For example, in a frequency band corresponding A=4 or B=6, the base station may support up to two SRS resources per SRS resource set. As shown in the examples 1450 and 1460, the electronic device may expect that the base station configures 2 or smaller as a maximum number of SRS resources per SRS resource set.

Alt 3: An SRS resource symbol in one SRS resource set being transmitted on multiple slots may be defined/-configured.

Alt 3 may be applied in consideration of both the number of SRS resource symbols in one SRS resource set and a minimum guard period according to an SCS, described above in Alt 1 and Alt 2. However, the difference is that Alt 3 does not follow the previous standard (rel-16) defined so that an SRS resource set is valid in only one slot, and may define the SRS resource set to be valid in at least two or more slots.

For example, in a case where 8TyR (y>8) is given and an SCS corresponds to $\mu$= 480 (e.g., minimum guard period A is equal to 8 or 6), as shown in the example 1410 of FIG. 14A and the example 1450 of FIG. 14B, one SRS resource set is configured across multiple slots (across slots) and the SRS resource set may be configured to include two or more SRS resources. That is, the UE may expect that two or more SRS resources included in one SRS resource set are transmitted across multiple slots. The number of the multiple slots may correspond to a number of slots obtained by scaling conventional one slot by 4 times, or correspond to a number of slots smaller than the value obtained by scaling of 4 times. The number of the multiple slots may be defined for SCSs such as a specification, or configured by higher layer signaling.

For another example, in a case where 8TyR (y>8) is given and an SCS corresponds to $\mu$= 960 (e.g., minimum guard period B is equal to 16 or 6), as shown in the example 1420 of FIG. 14 and the example 1460 of FIG. 14B, the base station and the UE may expect that one SRS resource set is configured across multiple slots (across slots) and the SRS resource set is configured to include two or more SRS resources. The number of the multiple slots may correspond to a number of slots obtained by scaling conventional one slot by 8 times, or correspond to a number of slots smaller than the value obtained by scaling of 8 times. The number of the multiple slots may be defined for SCSs such as a specification, or may follow a method configured by higher layer signaling.

Alt 4: A new configuration may be considered according to an SRS resource type (resourceType).

An SRS resource type and a configuration of SRS resource sets and SRS resources per SRS resource set in the embodiments of Alt 1 to Alt 3 described above may be considered together for a configuration.

For example, the base station and the electronic device may expect to perform configuration for periodic SRS transmission with respect to Alt 1 or Alt 2, and perform configuration for semi-persistent SRS or aperiodic SRS transmission with respect to Alt 3.

As another example, the base station and the electronic device may expect to perform configuration for periodic SRS or semi-persistent SRS transmission with respect to Alt 1 or Alt 2, and perform configuration for aperiodic SRS transmission with respect to Alt 3.

As another example, the base station and the UE may expect that a higher layer selectively performs respective configuration for periodic SRS, semi-persistent SRS, and aperiodic SRS transmission with respect to Alt 3. That is, whether multiple SRS resources in one SRS resource set are transmitted on multiple slots may be configured for each SRS resource type through higher layer signaling. Whether configuration is supported may be configured based on a UE capability report of the UE.

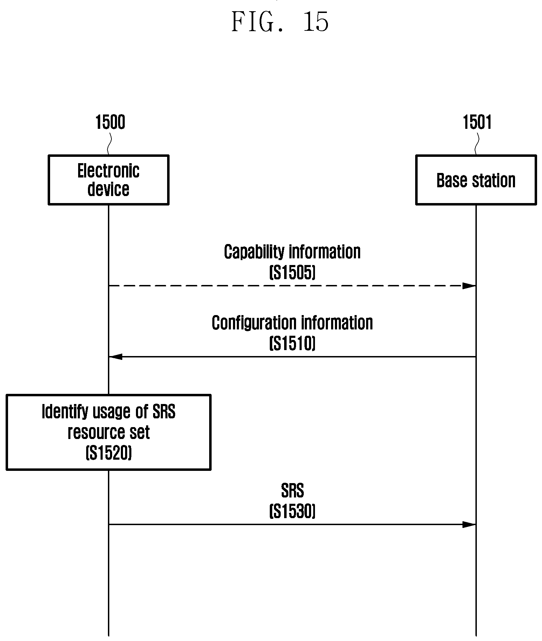

FIG. 15 illustrates an example of a signaling procedure between an electronic device 1500 and a base station 1501 according to an embodiment of the disclosure. FIG. 15 merely corresponds to an example for explanation of the disclosure, and does not limit the technical range of the disclosure.

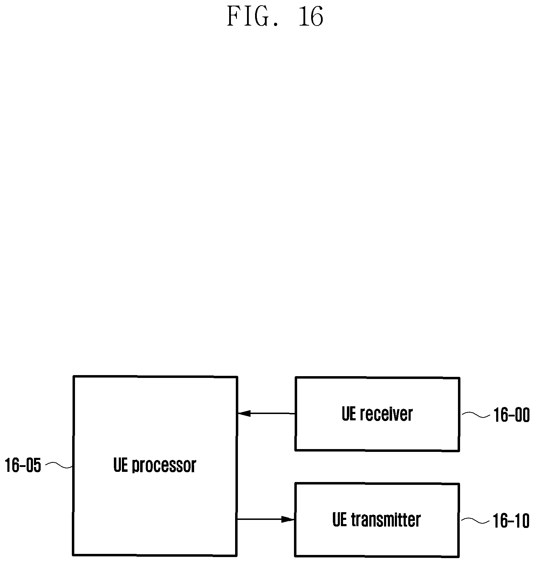

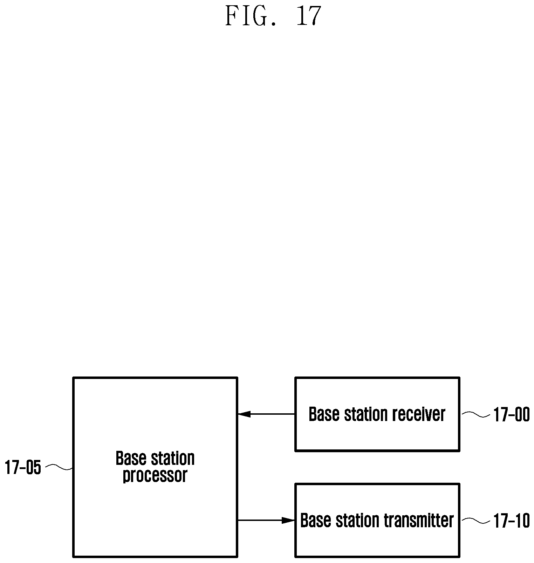

The electronic device and/or base station of FIG. 15 may operate based on the above embodiments proposed in the disclosure. In addition, the electronic device of FIG. 15 may correspond to the UE of FIG. 16, and the base station of FIG. 15 may correspond to the base station of FIG. 17. In addition, the order in the description of FIG. 15 may not necessarily correspond to the order of execution, and the sequence may be altered or executed in parallel. Alternatively, some elements may be omitted or only some elements may be included without departing from the gist of the disclosure. In addition, in the above embodiments of the disclosure, some or all of the contents included in each embodiment may be executed in combination without departing from the gist of the disclosure.

The electronic device may receive configuration information from the base station (operation S15 10). That is, the base station may transmit the configuration information to the electronic device. The configuration information may be transferred through RRC signaling.

The configuration information may include a first configuration (e.g., SRS-ResourceSet) for an SRS resource set. The first configuration may include at least one of an identifier of the SRS resource set, a resource type indicating a time domain operation (behavior) of an SRS resource configuration, or an SRS resource usage. The resource type may be configured to be one of periodic, semi-persistent, or aperiodic. The SRS resource usage may be configured to be one of beam management, codebook, non-codebook, or antenna switching.

For example, multiple SRS resource sets of a semi-persistent type may be configured based on the first configuration. In this case, one of the multiple SRS resource sets may be activated or deactivated through medium access control-control element (MAC-CE) signaling. That is, the electronic device may receive, from the base station, a message that activates one of the multiple SRS resource sets of the semi-persistent type.

In addition, the configuration information may include a second configuration for an SRS resource. The second configuration for the SRS resource may include an SRS resource identifier (e.g., srs-ResourceId), a first parameter (e.g., nrofSRS-Ports) indicating the number of SRS port, a second parameter (e.g., transmissionComb) for configuring a transmission comb, and a third parameter (e.g., resourceMapping) indicating the position of the SRS resource.

For example, the first parameter may be configured to be 8 ports. The second parameter may include a first sub parameter (e.g., combOffset) indicating a comb offset corresponding to the 8 ports and a second sub parameter (e.g., cyclicShift) indicating a cyclic shift. The third parameter may include the number (e.g., nrofSymbols) of SRS symbols in a slot, a parameter (e.g., startPosition) associated with the start position of the SRS symbols, and a repetition factor. For example, the number of the SRS symbols may be configured to be 8.

The electronic device may identify, based on the first configuration, that a usage of the SRS resource set is configured to be antenna switching (operation S1520).

The electronic device may transmit an SRS to the base station (operation S1530). That is, the base station may receive the SRS from the electronic device. The SRS may be used for DL CSI acquisition. In addition, the SRS may be transmitted based on x antennas among y reception antennas of the electronic device through antenna switching.

For example, y may be a natural number equal to or greater than 6, and x may be a natural number equal to or smaller than y. For example, x=8 and y=8 or x=8 and y=12 may be satisfied.

For example, the number of the SRS resource sets associated with the SRS transmission may be determined based on whether capability information of the electronic device associated with a resource type of the SRS in the time domain is reported. For example, if a semi-persistent SRS resource type being supported by the electronic device is reported based on the capability information, the number of the SRS resource sets may be determined to be 2. For example, if the electronic device has not reported the semi-persistent SRS resource type being supported by the electronic device, the number of the SRS resource sets may be determined to be 1.

For example, a subcarrier spacing at which the SRS is transmitted may be 480 kHz or 960 kHz, and multiple SRS resources included in one SRS resource set may be transmitted over multiple slots.

Before operation S1510, the electronic device may transmit capability information to the base station (operation S1505). That is, the base station may receive the capability information from the electronic device. The capability information may include information on an SRS antenna switching capability supported by the electronic device.

For example, the information on the SRS antenna switching capability may include a parameter indicating that antenna switching in a case of x=8 and y=8 is supported. For example, the information on the SRS antenna switching capability may include a parameter indicating that antenna switching in a case of x=8 and y=12 is supported.

For example, the capability information may include capability information of the electronic device associated with a resource type of the SRS. For example, whether a periodic SRS resource type is supported, whether a semi-persistent SRS resource type is supported, or whether an aperiodic SRS resource type is supported may be reported to the base station by the electronic device.

FIG. 16 illustrates a structure of a UE in a wireless communication system according to an embodiment of the disclosure. The UE in FIG. 16 may correspond to the above-mentioned electronic device, and may include a user equipment (UE), a mobile station (MS), a cellular phone, a smartphone, a computer, a CPE, an FWA, a vehicle, an industrial equipment, etc. The UE (electronic device) may support Tx antenna ports the number of which exceeds 4.

Referring to FIG. 16, the UE may include a transceiver, which refers to a UE receiver 16-00 and a UE transmitter 16-10 as a whole, a memory (not illustrated), and a UE processor 16-05 (or UE controller or processor). The UE transceiver 16-00 and 16-10, the memory, and the UE processor 16-05 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. For example, the processor may control the components of the UE to identify that the usage of an SRS resource set is configured as antenna switching, and transmit an SRS based on x antennas among y Rx antennas of the UE. The processor may include multiple processors, and the processor may perform operations of controlling the components of the UE by executing programs stored in the memory.

FIG. 17 illustrates a structure of a base station in a wireless communication system according to an embodiment of the disclosure.

Referring to FIG. 17, the base station may include a transceiver, which refers to a base station receiver 17-00 and a base station transmitter 17-10 as a whole, a memory (not illustrated), and a base station processor 17-05 (or base station controller or processor). The base station transceiver 17-00 and 17-10, the memory, and the base station processor 17-05 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control the respective components of the base station to transmit, to the UE, configuration information including configuration with regard to an SRS resource and configuration with regard to an SRS resource set. In addition, the processor may control the components of the base station to configure the usage of an SRS resource set as antenna switching, and receive an SRS transmitted based on x antennas among y Rx antennas of the UE. The processor may include multiple processors, and the processor may perform operations of controlling the components of the base station by executing programs stored in the memory.

The methods according to embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings have been presented to easily explain the technical contents of the disclosure and help understanding of the disclosure, and are not intended to limit the scope of the disclosure. That is, it will be apparent to those skilled in the art that other modifications and changes may be made thereto on the basis of the technical idea of the disclosure. Further, the above respective embodiments may be employed in combination, as necessary. For example, one embodiment of the disclosure may be partially combined with other embodiments to operate a base station and a terminal. As an example, embodiment 1 and 2 of the disclosure may be combined with each other to operate a base station and a terminal. Further, other variants based on the technical idea of the embodiments may also be implemented in other communication systems.

**Claims**

1. A method of transmitting a sounding reference signal (SRS) by an electronic device in a wireless communication system, the method comprising:

   receiving configuration information including a first configuration for SRS resource sets;
   identifying, based on the first configuration, that a usage of the SRS resource sets is configured to be antenna switching; and
   transmitting the SRS, based on x antennas among y reception antennas of the electronic device,
   wherein y is a natural number equal to or greater than 6, and x is a natural number equal to or smaller than y, and
   wherein a number of the SRS resource sets associated with the SRS transmission is determined based on whether capability information of the electronic device associated with a resource type of the SRS in a time domain is reported.

2. The method of claim 1,

   wherein y is equal to 8, and
   wherein, in case that the capability information associated with a semi-persistent SRS resource type is reported, the number of the SRS resource sets is determined to be 2.

3. The method of claim 1,

   wherein multiple SRS resource sets of a semi-persistent type are configured through radio resource control (RRC) signaling, based on the first configuration, and
   wherein one of the multiple SRS resource sets is activated through medium access control-control element (MAC-CE) signaling.

4. The method of claim 1, further comprising transmitting information on an SRS antenna switching capability supported by the electronic device,
wherein the information comprises a parameter indicating that antenna switching in case that y is equal to 6 or 8 is supported.

5. The method of claim 1,

   wherein x is equal to 8,
   wherein a subcarrier spacing at which the SRS is transmitted is 480 kHz or 960 kHz, and
   wherein multiple SRS resources included in one SRS resource set are transmitted over multiple slots.

6. The method of claim 1,

   wherein the configuration information comprises a second configuration for an SRS resource,
   wherein the second configuration comprises a first parameter indicating a number of SRS ports, a second parameter for a configuration of a transmission comb, and a third parameter indicating a position of the SRS resource,
   wherein the first parameter is configured to be 8 ports,
   wherein the second parameter comprises a first sub parameter indicating a comb offset corresponding to the 8 ports and a second sub parameter indicating a cyclic shift, and
   wherein the third parameter comprises a number of SRS symbols in a slot, which is configured to be 8.

7. An electronic device for transmitting a sounding reference signal (SRS) in a wireless communication system, the electronic device comprising:

   a transceiver configured to receive configuration information including a first configuration for SRS resource sets; and
   a controller configured to identify, based on the first configuration, that a usage of the SRS resource sets is configured to be antenna switching, and to transmit the SRS, based on x antennas among y reception antennas of the electronic device,
   wherein y is a natural number equal to or greater than 6, and x is a natural number equal to or smaller than y, and
   wherein a number of the SRS resource sets associated with the SRS transmission is determined based on whether capability information of the electronic device associated with a resource type of the SRS in a time domain is reported.

8. The electronic device of claim 7,

   wherein, in case that the capability information associated with a semi-persistent SRS resource type is reported, the number of the SRS resource sets is determined to be 2,
   wherein two SRS resource sets of a semi-persistent type are configured through radio resource control (RRC) signaling, based on the first configuration, and
   wherein one of the multiple SRS resource sets is activated through medium access control-control element (MAC-CE) signaling.

9. The electronic device of claim 7,

   wherein the controller is further configured to transmit information on an SRS antenna switching capability supported by the electronic device, and
   wherein the information comprises a parameter indicating that antenna switching in case that y is equal to 6 or 8 is supported.

10. The electronic device of claim 7,

    wherein x is equal to 8,
    wherein a subcarrier spacing at which the SRS is transmitted is 480 kHz or 960 kHz, and
    wherein multiple SRS resources included in one SRS resource set are transmitted over multiple slots.

11. A method of receiving a sounding reference signal (SRS) by a base station in a wireless communication system, the method comprising:

transmitting, to an electronic device, configuration information including a first configuration for SRS resource sets; and
receiving the SRS transmitted based on x antennas among y reception antennas of the electronic device,
wherein a usage of the SRS resource sets is configured to be antenna switching, based on the first configuration,
wherein y is a natural number equal to or greater than 6, and x is a natural number equal to or smaller than y, and
wherein a number of the SRS resource sets associated with the SRS transmission is determined based on whether capability information of the electronic device associated with a resource type of the SRS in a time domain is reported.

12. The method of claim 11,

wherein y is equal to 8, and
wherein, in case that the capability information associated with a semi-persistent SRS resource type is reported, the number of the SRS resource sets is determined to be 2.

13. The method of claim 11, further comprising receiving information on an SRS antenna switching capability supported by the electronic device,

wherein the information comprises a parameter indicating that antenna switching in case that y is equal to 6 or 8 is supported,
wherein multiple SRS resource sets of a semi-persistent type are configured through radio resource control (RRC) signaling, based on the first configuration, and
wherein one of the multiple SRS resource sets is activated through medium access control-control element (MAC-CE) signaling.

14. The method of claim 11,

wherein x is equal to 8,
wherein a subcarrier spacing at which the SRS is transmitted is 480 kHz or 960 kHz, and
wherein multiple SRS resources included in one SRS resource set are received over multiple slots.

15. A base station for receiving a sounding reference signal (SRS) in a wireless communication system, the base station comprising:

a transceiver configured to transmit, to an electronic device, configuration information including a first configuration on SRS resource sets, and receive the SRS transmitted based on x antennas among y reception antennas of the electronic device; and
a controller configured to control the transceiver,
wherein a usage of the SRS resource sets is configured to be antenna switching, based on the first configuration,
wherein y is a natural number equal to or greater than 6, and x is a natural number equal to or smaller than y, and
wherein a number of the SRS resource sets associated with the SRS transmission is determined based on whether capability information of the electronic device associated with a resource type of the SRS in a time domain is reported.

# FIG. 1

One subframe (110)

$N_{symb}^{subframe,\mu}$ OFDM symbols

1 OFDM symbols (102)

1 subcarrier (103)

$K=N_{RB,x}^{max,\mu} N_{sc}^{RB}-1$

$N_{RB}^{\mu} N_{sc}^{RB}$ subcarriers

Resource block $N_{sc}^{RB}$ subcarriers (104)

Resource element (k,l) (101)

Frequency

Time

$K=0$

$\bar{l}=0$

$\bar{l}=14 \cdot 2^{\mu}-1$

FIG. 2

FIG. 3

BWP#1
(301)

BWP#2
(302)

Frequency

UE bandwidth (300)

# FIG. 4

Duration
(404)

Frequency
resources
(403)

UE bandwidth
part (410)

Frequency

Time

Slot (420)

Control resource set#1 (401)

Control resource set#2 (402)

# FIG. 5A

# FIG. 5B

| 1 slot = 14 OFDM symbols | | | | | | | | | | | | | |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

Search space 1
Search space 2
Search space 3

(5b-00)
(X,Y) = (7,4)

X=7
Y=3
Y=3

(5b-05)
(X,Y) = (4,3)

X=4
X'=5>X
X'=5>X
Y=3
Y=3
Y=3

(5b-10)
(X,Y) = (2,2)

X=2  X=2  X=2  X=2  X=2  X=2  X=2
Y=2  Y=2  Y=2  Y=2  Y=2  Y=2  Y=2

EP 4 472 122 A1

# FIG. 6

Receive PDCCH indicating new
UL transmission or DL transmission (630)

605     610     605     605     610     605     610     605

615     615     615

Drx-onDurationTimer
(615)

drx-InactivityTimer
started or restarted (620)

drx-LongCycle (625)     625     625     625

□ Active time (605)

EP 4 472 122 A1

FIG. 7

TCI state #0
(700)

TCI state #1
(705)

TCI state #2
(710)

# FIG. 8

RRC configured TCI states (800)

| TCI #0 (805) | TCI #1 (810) | TCI #2 (815) | . . . | TCI #N (820) |

A list of TCI states for a CORESET (825)

| TCI #a (830) | TCI #b (835) | . . . | TCI #n (840) |

TCI indication via MAC CE (845)

FIG. 9

| R (910) | Serving Cell ID (915) | BWP ID (920) | Oct 1 (900) |
|---------|----------------------|--------------|-------------|
| CORESET ID (925) | TCI state ID (930) | | Oct 2 (905) |

EP 4 472 122 A1

# FIG. 10

# FIG. 11

EP 4 472 122 A1

# FIG. 12

| Control information for TRP #0 | — | DCI #0 |
| Control information for TRP #1 | — | DCI #1 |
| ⋮ | | ⋮ |
| Control information for TRP #(N-1) | — | DCI #(N-1) |

Case #1 (1200)

| Control information for TRP #0 | — | DCI #0 |
| Control information for TRP #1 | — | sDCI #0 |
| ⋮ | | ⋮ |
| Control information for TRP #(N-1) | — | sDCI #(N-2) |

Case #2 (1205)

| Control information for TRP #0 | — | DCI |
| Control information for TRP #1 | — | sDCI |
| ⋮ | | |
| Control information for TRP #(N-1) | | |

Case #3 (1210)

| Control information for TRP #0 | | |
| Control information for TRP #1 | — | Long DCI |
| ⋮ | | ⋮ |
| Control information for TRP #(N-1) | | |

Case #4 (1215)

EP 4 472 122 A1

# FIG. 13A

xTyR (x=6, y=8)

1300

xTyR (x=8, y=8)

1320

# FIG. 13B

combOffset-n2 = 0, 1
Cyclicshift = 0, 1, 2, 3

combOffset-n4 = 0, 1, 2, 3
Cyclicshift = 0, 1

SRS resource #1

SRS resource #1

{ 4, 5, 6, 7 }
{ 0, 1, 2, 3 }    SRS port #

{ 6, 7 }
{ 4, 5 }
{ 2, 3 }
{ 0, 1 }    SRS port #

1350

1370

# FIG. 14A

# FIG. 14B

1450

| PDSCH / PUSCH | G (A=4) | SRS #1 | G (A=4) | SRS #2 | G (A=4) | SRS #3 |

Slot #0      Slot #1

1$^{st}$ SRS resource set

1460

| PDSCH / PUSCH | G (B=6) | SRS #1 | G (B=6) | SRS #2 | G (B=6) | SRS #3 |

Slot #0      Slot #1

# FIG. 15

1500

1501

Electronic device

Base station

Capability information
(S1505)

Configuration information
(S1510)

Identify usage of SRS
resource set
(S1520)

SRS
(S1530)

FIG. 16

16-05 〜 | UE processor |

UE receiver 〜 16-00

UE transmitter 〜 16-10

FIG. 17

17-05 ~ **Base station processor**

**Base station receiver** ~ 17-00

**Base station transmitter** ~ 17-10

## INTERNATIONAL SEARCH REPORT

| International application No. |
| --- |
| **PCT/KR2023/002963** |

| | |
| --- | --- |
| **A.** | **CLASSIFICATION OF SUBJECT MATTER** |

**H04L 5/00**(2006.01)i; **H04L 27/26**(2006.01)i; **H04W 72/23**(2023.01)i; **H04W 72/04**(2009.01)i; **H04W 72/51**(2023.01)i; **H04B 7/06**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H04L 5/00(2006.01); H04B 7/06(2006.01); H04B 7/08(2006.01); H04L 27/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS, 자원 세트(resource set), 설정(configuration), 용도(usage), 안테나 스위칭 (antenna switching), 안테나(antenna), 능력 정보(capability information)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X<br><br>A | WO 2021-162496 A1 (LG ELECTRONICS INC.) 19 August 2021 (2021-08-19)<br>See paragraphs [0150], [0181], [0189], [0244], [0279] and [0315]; and claim 1. | 1-4,7-9,11-13,15<br><br>5-6,10,14 |
| A | WO 2019-168354 A1 (LG ELECTRONICS INC.) 06 September 2019 (2019-09-06)<br>See paragraphs [0242]-[0295]; claims 1-2; and figures 9-10. | 1-15 |
| A | MODERATOR (ZTE). FL summary #1 on SRS enhancements. R1-2108217, 3GPP TSG RAN WG1 Meeting #106-e, e-Meeting. 20 August 2021.<br>See pages 21-26. | 1-15 |
| A | KR 10-2188070 B1 (LG ELECTRONICS INC.) 07 December 2020 (2020-12-07)<br>See paragraphs [0313]-[0341]; and figures 17-18. | 1-15 |
| A | KR 10-2021-0011399 A (QUALCOMM INCORPORATED) 01 February 2021 (2021-02-01)<br>See paragraphs [0059]-[0068]; and figures 6a-7b. | 1-15 |

☐ Further documents are listed in the continuation of Box C.    ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **12 June 2023** | **13 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/002963**

| Patent document cited in search report | | | Publication date (day/month/year) | Patent family member(s) | | | Publication date (day/month/year) |
|---|---|---|---|---|---|---|---|
| WO | 2021-162496 | A1 | 19 August 2021 | EP | 4106250 | A1 | 21 December 2022 |
| | | | | KR | 10-2022-0126292 | A | 15 September 2022 |
| WO | 2019-168354 | A1 | 06 September 2019 | | None | | |
| KR | 10-2188070 | B1 | 07 December 2020 | CN | 111201746 | A | 26 May 2020 |
| | | | | CN | 111201746 | B | 14 September 2021 |
| | | | | EP | 3687099 | A1 | 29 July 2020 |
| | | | | JP | 2020-536467 | A | 10 December 2020 |
| | | | | JP | 6878694 | B2 | 02 June 2021 |
| | | | | US | 11018822 | B2 | 25 May 2021 |
| | | | | US | 11496261 | B2 | 08 November 2022 |
| | | | | US | 2020-0382250 | A1 | 03 December 2020 |
| | | | | US | 2021-0226752 | A1 | 22 July 2021 |
| | | | | US | 2023-0060652 | A1 | 02 March 2023 |
| | | | | WO | 2019-164309 | A1 | 29 August 2019 |
| KR | 10-2021-0011399 | A | 01 February 2021 | CN | 112106310 | A | 18 December 2020 |
| | | | | EP | 3794745 | A1 | 24 March 2021 |
| | | | | SG | 11202010762 | A | 30 December 2020 |
| | | | | TW | 202013914 | A | 01 April 2020 |
| | | | | US | 11032048 | B2 | 08 June 2021 |
| | | | | US | 2019-0356445 | A1 | 21 November 2019 |
| | | | | WO | 2019-222491 | A1 | 21 November 2019 |

Form PCT/ISA/210 (patent family annex) (July 2022)